# EUROPEAN PATENT APPLICATION

(11) **EP 2 386 471 A2**
(43) Date of publication of application: **16.11.2011**
(21) Application number: 11165733.4
(22) Date of filing: 11.05.2011
(51) Int. Cl.: B62K 19/46, B62K 19/30, B62K 21/12

(54) **Accessories for a bicycle and the like, and method for accessing articles from a moving bicycle and the like**

(30) Priority: 12.05.2010 US 333939 P; 17.02.2011 US 443878 P
(71) Applicant: Zacks, Yoav, 90805 Mevasseret Zion (IL)
(72) Inventor: Zacks, Yoav, 90805 Mevasseret Zion (IL)
(74) Representative: Sevinç, Erkan

(57) **Abstract**

There is provided an apparatus (100) configured for being fixedly secured to a handlebar (900) of a bicycle and for use with one or more retrievable storage units stowed within the handlebar.

## Description

### FIELD OF THE INVENTION

This invention relates to storage and to retrieval of items inside a bicycle or the like.

### BACKGROUND OF THE INVENTION

Storage systems for items associated with bicycles and cyclists (also referred to interchangeably herein as bicycle riders or riders) are generally found in three categories: (a) storage units carried on the person of the cyclist; (b) storage units externally mounted to the bicycle; (c) storage units that utilize part of the inside of the bicycle handle bar. Retrieval of such items, particularly on the go, when the cyclist is riding the bicycle at speed and requires to control the bicycle and to maintain and/or to change speed, presents unique challenges. These challenges are even more acute with road bikes (also referred to interchangeably herein as road bicycles, racing bikes or racing bicycles), with the requirements for low bicycle weight, high cycling speeds and frequent intake of energy and nutritional products by the cyclist. Such products are often in the form of gel packages and the like, for example as disclosed in US 2006/0280777, the contents of which are incorporated fully herein by reference, and there are currently many such products commercially available.

The first category often takes the form of pockets integral with the cyclist's clothing and has the advantage of requiring no modifications or accessories to the bicycle itself. While retrieval of the stored items, particularly on the go, can often be difficult and may require some cyclists to slow down for this purpose, this type of solution incurs no weight penalty on the bicycle per se and is often favored by road bike cyclists. On the other hand, many cyclists consider storing items in such pockets risky, as the items can fall out during cycling, and/or find it difficult to maneuver the hand to retrieve items from such pockets, and/or have to choose the right moment for such retrieval without other cyclists nearby to avoid possibility of collisions.

There are many known storage systems in categories (b) and (c). However, both categories result in a weight penalty to the bicycle, category (b) usually more so than category (c). Furthermore, known systems in category (c) are unsuitable for retrieval of the stored items while on the go, particularly using only one hand and/or while maintaining integrity of the bicycle's control systems.

By way of general background, the following patents disclose storage arrangements under category (b), and the contents of these patents are incorporated fully herein by reference: US 5,894,955; US 4,911,339; US 6,045,020; US 5,862,965; JP 2009051482. Further by way of general background, the following patents disclose storage arrangements under category (c), and the contents of these patents are incorporated fully herein by reference: US 6,564,982; US 5,950,498; CN 201120940; FR 2,707,243.

### SUMMARY OF THE INVENTION

According to a first aspect of the invention, there is provided an apparatus (also referred to interchangeably herein as an accessory) for a bicycle handlebar configured for being fixedly secured to a handlebar of a bicycle.

According to the first aspect of the invention, there is also provided an apparatus for a bicycle handlebar having an internal handlebar cavity in open communication with an open end of the handlebar, said open end having an edge and an external surface, the apparatus being configured for being fixedly secured to the handlebar and comprising a ring member configured for being fixedly secured to the external surface of the open end of the handlebar and for selectively enabling access to the handlebar cavity via said ring member, wherein said apparatus is configured in use for releasably affixing thereto and for enabling retrieval of one or more items previously accommodated in the handlebar cavity via said ring member with one hand at least while the bicycle is in motion, and wherein said ring member is configured for remaining fixedly secured to the external surface at least during said retrieval. According to this aspect of the invention there is also provided a bicycle handlebar comprising such an apparatus, and also a bicycle comprising such a bicycle handlebar.

According to the first aspect of the invention there is also provided an apparatus for a bicycle handlebar having an internal handlebar cavity in open communication with an open end of the handlebar, said open end having an edge and an external surface, the apparatus being configured for being fixedly secured to the handlebar and comprising a ring member configured for being fixedly secured to the external surface of the open end of the handlebar and for selectively enabling access to the handlebar cavity via said ring member, wherein said apparatus is configured in use for facilitating at least retrieval of one or more items previously accommodated in the handlebar cavity via said ring member with one hand at least while the bicycle is in motion, and wherein said ring member is configured for remaining fixedly secured to the external surface at least during said retrieval.

Said external surface of the open end of the handlebar extends from the edge, and thus comprises the cylindrical outer surface of the handlebar in the vicinity of the edge of the open end of the handlebar.

In at least some embodiments, the apparatus is further configured for enabling said open end to be selectively and alternately open and closed, at least when said ring member is fixedly secured to the external surface. The ring member may optionally comprise an end cap member configured for being selectively engaged and disengaged with respect to said ring member, wherein in use and said end cap member is engaged to the ring member the open end is closed and access denied to the handlebar cavity, and wherein in use and said end cap member is disengaged to the ring member the open end is open and access permitted to the handlebar cavity. For example, said end cap member may be hingedly connected to said ring member, or may be connected thereto in any suitable manner; alternatively, the cap may be fully removed when open.

In at least some embodiments including the above embodiments, the end cap is optionally sealingly engaged with respect to said ring member in the engaged position.

In at least one or more of the above embodiments, said ring member comprises a tubular casing having a first open casing end and a second open casing end, and a longitudinal passageway extending between said first open casing end and said second open casing end. In some such embodiments, said tubular casing comprises a longitudinal slit extending between said first open end and said second open end to define opposed longitudinal casing edges, wherein said longitudinal casing edges may be reversibly separated to facilitate engaging said ring member to the handlebar, and wherein said ring member further comprises a locking arrangement for locking the longitudinal casing edges in mutual abutment thereby closing the slit.

In at least one or more of the above embodiments said ring member is configured for being sealingly engaged to the external surface of the open end when said apparatus is fixedly secured to the handlebar. For example, said ring member may comprise at least one annular rim formed on an inner facing surface thereof that is in opposed relationship to the external surface when said apparatus is fixedly secured to the handlebar, said at least one annular rim being configured for being resiliently deformed on the external surface when the ring member is fixedly secured to an external surface.

In at least one or more of the above embodiments the external surface of the open end handlebar may be threaded, and said ring member comprises an inner-facing surface that is complementarily threaded with respect to the external surface of the open end of the handlebar, and wherein ring member is fixedly secured to the external surface of the open end of the handlebar by engaging the ring member threads with respect to the external surface threads.

In at least one or more of the above embodiments said ring member comprises at least one longitudinal stop configured for abutting against the edge of the open end of the handlebar when the apparatus is fixedly secured to the handlebar.

In at least one or more of the above embodiments ring member is configured for being selectively engaged with at least one storage unit at least when the storage unit is in a stowed position accommodated within the internal cavity in use of said apparatus. Optionally, said ring member is further configured for being selectively engaged with the at least one storage unit when the storage unit is in a deployed position at least partially outside of the internal cavity in use of said apparatus.

In at least some such embodiments, the apparatus may further comprise the at least one storage unit, wherein said at least one storage unit is selectively slidingly displaceable between said stowed position and said deployed position, and wherein said at least one storage unit is configured for allowing at least retrieval of at least one stored item therefrom at least in said deployed position. In some such embodiments, said at least one storage unit comprises a storage tray that is movably mounted to said ring member, said storage tray being selectively slidingly movable with respect to said ring member between said stowed position and said deployed position, said storage tray being configured for enabling items to be accommodated therein in said stowed position, and for enabling such items to be retrieved therefrom when said tray is in the deployed position. The ring member may comprise a first longitudinal stop and a second longitudinal stop, and wherein said storage tray comprises an elongate trough member, and a first tray end and a second tray end at opposite longitudinal ends of said trough member, wherein said trough member is configured for being slidingly displaced with respect to said passageway between said stowed position, wherein said first longitudinal end is in abutment with said first stop, and said deployed position, wherein said second longitudinal end is in abutment with said second stop. The first tray end may be configured for being displaced at least from said stowed position to said deployed position using at least one finger of a cyclist. The first tray end may optionally comprise a handle member that is selectively engageable with the at least one finger of the cyclist and configured for enabling said tray to be selectively pulled thereby to said deployed position. The first tray end may additionally or alternatively comprise a recess configured for enabling at least the tip of the at least one finger of the cyclist to be introduced therein, wherein in operation the tip of the at least one finger of the cyclist may be inserted into the recess to engage with said recess and thereby enable pulling the tray to the deployed position. In embodiments where the first tray end may additionally comprise a recess configured for enabling at least the tip of the at least one finger of the cyclist to be introduced therein, and said handle member may comprises a resilient strut member inwardly cantilevered from a periphery of said recess and projecting longitudinally forward thereof , wherein in operation the tip of the at least one finger of the cyclist may be inserted into the recess behind the strut member to engage with said recess and thereby enable pulling the tray to the deployed position via the strut member.

In at least some embodiments, said trough member has a generally semi-circular transverse cross-section along a longitudinal length of the trough member. Alternatively the trough member may have a generally polygonal transverse cross-section along a longitudinal length of the trough member. Additionally or alternatively, said trough member may have a uniform or non-uniform cross section along the longitudinal length thereof.

In at least some embodiments, the trough member may be configured for accommodating therein a plurality of cylindrical items, each cylindrical item having an external diameter generally complementary to an internal diameter of said trough member.

In at least some embodiments, said trough member comprises an external diameter generally complementary to an internal diameter of said passageway.

In at least some of the above embodiments or other embodiments, said trough member is configured for being reversibly curved with respect to an elongate direction thereof.

In at least some of the above embodiments or other embodiments, the bicycle handlebar has at least one bend in proximity to the open end thereof, and said trough member is at least sufficiently resilient to enable said trough member to be correspondingly curved when inserted into a part of the internal cavity corresponding to the at least one bend into the stowed position and to enable said trough member to be extracted from this part of the internal cavity to the deployed position.

In at least some of the above embodiments or other embodiments, the bicycle handlebar has at least one bend in proximity to the open end thereof, and said trough member is at least sufficiently bendable to enable said trough member to be correspondingly curved when inserted into a part of the internal cavity corresponding to the at least one bend into the stowed position and to enable said trough member to be extracted from this part of the internal cavity to the deployed position.

In at least some of the above embodiments or other embodiments, said trough member is formed with a plurality of longitudinally spaced corrugations configured for enabling said tray to reversibly bend.

In at least some of the above embodiments or other embodiments, said trough member comprises a removable cover member, said cover member being configured for covering the trough member when in the stowed position and during displacement of the tray from the stowed position to the deployed position. Optionally, said cover member is hingedly mounted and/or removably mounted to said trough member, wherein said apparatus is configured for enabling the cover member to hingedly open when said apparatus is in said deployed position to enable access to said trough member.

According to at least some embodiments of the invention, said ring member is further configured for enabling selectively disengaging of the at least one storage unit therefrom to facilitate retrieval of the at least one storage unit from the internal cavity in use of the apparatus. In at least some of these embodiments or other embodiments said ring member comprises a hook member configured for reversibly engaging with a distal end of the at least one storage unit. In at least some of these embodiments or other embodiments said hook member comprises a strut member comprising a strut base and a strut free end, said strut member being inwardly cantilevered from a periphery of an outer-facing annular edge of said ring member, which in use of the apparatus is outwardly displaced with respect to the open end of the handlebar, said strut member being configured for reversibly engaging with a first end of the at least one storage unit. In at least some of these embodiments or other embodiments said strut member radially projects from said strut base towards a longitudinal centerline of said ring member. In at least some of these embodiments or other embodiments said free end comprises an enlarged portion and a neck portion intermediate said enlarged portion and said strut base. In at least some of these embodiments or other embodiments said strut member is integrally formed on said ring member; alternatively said strut member is formed on a ring-shaped carrier that is configured for being affixed to said ring member. In at least some of these embodiments or other embodiments the first end of the at least one storage unit comprises a finger grip portion having an opening that is selectively releasably engageable with respect to said enlarged portion. In at least some of these embodiments or other embodiments said free end projects towards said longitudinal centerline and is spaced therefrom by a first spacing.

According to the first aspect of the invention there is provided an apparatus for a bicycle handlebar, the bicycle handlebar having an internal handlebar cavity in open communication with an open end of the handlebar, said open end having an edge and an external surface, the apparatus being configured for being fixedly secured to the handlebar and comprising a ring member configured for being fixedly secured to the external surface of the open end of the handlebar and for selectively enabling access to the handlebar cavity via said ring member, wherein said apparatus is configured in use for at least enabling selective retrieval from the handlebar cavity of one or more items with one hand of a user at least while the bicycle is in motion, the one or more items being in a stowed position accommodated within said handlebar cavity (having been previously accommodated in the handlebar cavity via said ring member), and wherein said ring member is configured for remaining fixedly secured to the external surface at least during said retrieval. Optionally, the apparatus can be further configured in use for releasably affixing thereto said one or more items with said one hand or with another hand of the user, at least when each said item is in said stowed position, (at least while the bicycle is in motion), and wherein said ring member is configured for remaining fixedly secured to the external surface at least during said affixing. Additionally or alternatively, said apparatus can optionally be further configured for selectively and alternately opening and closing the open end of said handlebar, at least when said ring member is fixedly secured to the external surface; optionally, said ring member comprises an end cap member configured for being selectively closing and opening said ring member, wherein in use and said end cap member is in a closed position with respect to the ring member the open end of said handlebar is closed and access is denied to the handlebar cavity, and wherein in use and said end cap member is in an open position with respect to the ring member the open end of said handlebar is open and access is permitted to the handlebar cavity; further optionally said apparatus is configured for releasably affixing thereto said one or more items by releasably clamping an engagement portion of each respective said one or more items between said end cap member and said ring member when said end cap member is engaged to the ring member and when the respective said one or more items are in said stowed position; further optionally each respective said item comprises a finger grip portion, said engagement portion, and a housing defining an internal storage volume, in serial relationship; further optionally said apparatus is configured for releasably clamping said engagement portion of each respective said one or more items between said end cap member and said ring member while concurrently compelling the respective said finger grip portion to be in facing relationship with an external portion of said apparatus. Additionally or alternatively, said apparatus comprises a clamping arrangement comprising at least one clamp configured for enabling the respective said engagement portion to be automatically clamped to said apparatus when the end cap member is closed, and said engagement portion to be automatically unclamped from said apparatus when said end cap member is open thereby enabling the respective said item to be retrieved from said handlebar cavity by gripping the respective said gripping portion and pulling the respective item out of said handlebar cavity via the respective said gripping portion; optionally, said at least one clamp comprises a respective first clamping member in the form of a clamping tab that projects distally from a respective side of said end cap member, and a respective second clamping member in the form of a clamping pad provided on a respective side of said ring member; further optionally, a narrow opening is provided between clamping tab and said clamping pad when said end cap member is in the closed position, and wherein said narrow opening is configured for clamping therein said engagement portion of the respective said item while said engagement portion is folded over said clamping pad when said end cap member is in the closed position. Additionally or alternatively, said ring member optionally comprises a generally tubular casing having a first open casing end and a second open casing end, and a longitudinal passageway extending between said first open casing end and said second open casing end. Additionally or alternatively, said ring member is optionally configured for being sealingly engaged to the external surface of the open end when said apparatus is fixedly secured to the handlebar. Additionally or alternatively, said ring member optionally comprises at least one longitudinal stop configured for abutting against the edge of the open end of the handlebar when the apparatus is fixedly secured to the handlebar. Additionally or alternatively, the apparatus optionally further comprises at least one said item is in said stowed position accommodated within said handlebar cavity, each respective said item being in the form of a storage unit comprising a finger grip portion, an engagement portion, and a housing defining an internal storage volume, in serial relationship, wherein said engagement portion is configured to be releasably engaged to said apparatus while concurrently compelling the respective said finger grip portion to be in overlying relationship with an external portion of said apparatus; said finger grip portion is contiguous with said engagement portion and are in the form of any one of: a strip or material, a chord, a string, a chain; additionally or alternatively the storage unit is optionally configured having an absence of engagement arrangement for fixedly engaging the storage unit to the inside surface of the internal cavity.

According to the first aspect of the invention there is provided an apparatus for a bicycle handlebar, the bicycle handlebar having an internal handlebar cavity in open communication with an open end of the handlebar, said open end having an edge and an external surface, the apparatus being configured for being fixedly secured to the handlebar and for selectively enabling access to the handlebar cavity via said apparatus, wherein said apparatus is configured for use with at least one storage unit, said storage unit comprising a finger grip portion and a housing defining a storage volume, at least a part of said housing configured for being accommodated in a stowed position within said handlebar cavity, said storage unit further comprising an engagement portion intermediate said finger grip portion and said housing, and wherein said apparatus is configured for releasably clamping said engagement portion while said housing is in said stowed position and while concurrently compelling said finger grip portion to be in facing relationship with an external portion of said apparatus. The apparatus may optionally further comprise one or more elements and features of the other embodiments disclosed herein, *mutatis mutandis.*

In at least some of the above embodiments or other embodiments said apparatus is made from a weatherproof material.

In at least some of the above embodiments or other embodiments said bicycle handlebar has a drop-bar configuration.

In at least some of the above embodiments or other embodiments said bicycle handlebar has a conventional internal diameter of about 20.5mm; alternatively bicycle handlebar has a diameter greater than the conventional internal diameter of about 20.5mm. For example, the handlebar may have a diameter greater than about 20.5mm by up to 5%, or up to 10%, or by up to 15%, or by up to 20%, or by up to 25%, or by up to 30% or by up to 35%, or by up to 40%, or by up to 45%, or by up to 50%, or by up to 60%, or by up to 70%, or by up to 80%, or by up to 90%, or by up to 100% or greater.

According to the first aspect of the invention there is provided a bicycle handlebar comprising an apparatus according to the first aspect of the invention as defined above, for example, *mutatis mutandis.* In at least some embodiments, said bicycle handlebar is a drop handlebar. In at least some of these embodiments or other embodiments, said bicycle handlebar has a conventional internal diameter of about 20.5mm; alternatively, said bicycle handlebar may have a diameter greater than the conventional internal diameter of about 20.5mm. For example, the handlebar may have a diameter greater than about 20.5mm by up to 5%, or up to 10%, or by up to 15%, or by up to 20%, or by up to 25%, or by up to 30% or by up to 35%, or by up to 40%, or by up to 45%, or by up to 50%, or by up to 60%, or by up to 70%, or by up to 80%, or by up to 90%, or by up to 100% or greater.

According to the first aspect of the invention there is also provided a bicycle comprising a bicycle handlebar according to the first aspect of the invention as defined above, for example, *mutatis mutandis.*

It is to be noted that herein the expression "the bicycle is in motion" relates to the bicycle moving with respect to the ground while in contact therewith, i.e., while the bicycle is being propelled (typically by motive power provided to the bicycle by the rider via the pedals) and the bicycle wheels are turning over the ground in contact therewith.

According to a second aspect of the invention, there is provided storage unit (also referred to interchangeably herein as an item or as an article) configured for being retrievably accommodated in an inside of handlebar of a bicycle.

According to the second aspect of the invention there is also provided a storage unit configured for being selectively stowed in and retrieved from an internal cavity of a bicycle handlebar via an open end of the handlebar that is in open communication with the internal cavity, the storage unit comprising a housing having a proximal end and a distal end and further defining an internal storage volume, wherein said distal end comprises an elongate gripping portion configured for projecting to an outside of said bicycle handlebar, and wherein said storage unit is configured having an absence of engagement arrangement for fixedly engaging the storage unit to the inside surface of the internal cavity.

According to the second aspect of the invention there is also provided a storage unit configured for being selectively stowed in and retrieved from an internal cavity of a bicycle handlebar via an open end of the handlebar that is in open communication with the internal cavity, the storage unit comprising a housing having a proximal end and a distal end and further defining an internal storage volume, wherein said distal end comprises a finger grip portion, and wherein said storage unit is configured having an absence of engagement arrangement for fixedly engaging the storage unit to the inside surface of the internal cavity.

In at least some embodiments of the storage unit, said finger grip portion is configured for being accommodated fully within the internal cavity when said storage unit is stowed therein. In these or other embodiments of the storage unit, said finger grip portion is configured for being accommodated partially within the internal cavity when said storage unit is stowed therein.

In at least some of the above embodiments or other embodiments of the storage unit, said finger grip portion comprises a distal tab distally projecting from said distal end. In at least some such embodiments, the distal tab comprising an opening that is selectively releasably engageable with respect to a hook member, for example the free end of a strut member, that may be provided in said opening. For example, a periphery of said opening is deformable to allow reversible expansion of said opening. For example said opening is shaped as a cruciform having deformable flap portions, or may be star-shaped, or may have any other suitable form.

In at least some of the above embodiments or other embodiments of the storage unit, said housing is formed as an elongate generally cylindrical reservoir.

In at least some of the above embodiments or other embodiments of the storage unit, said housing, said distal end and said proximal end are integrally formed.

In at least some of the above embodiments or other embodiments of the storage unit, said housing has an absence of a discrete opening to said internal storage volume.

In at least some of the above embodiments or other embodiments of the storage unit, said storage unit may be configured for enabling access to said internal storage volume responsive to a destructive action carried out on said housing. For example, said storage unit may comprise a weakened structure in the vicinity of said internal storage volume. Optionally, said distal tab comprises a notch and is configured to be tearable from said notch to said internal storage volume when a shear force is applied between the distal tab and said housing.

According to the second aspect of the invention there is also provided a storage unit configured for being selectively stowed in and retrieved from an internal cavity of a bicycle handlebar via an apparatus, the bicycle handlebar having an internal handlebar cavity in open communication with an open end of the handlebar, said open end having an edge and an external surface, said apparatus being configured for being fixedly secured to the handlebar and comprising a ring member configured for being fixedly secured to the external surface of the open end of the handlebar and for selectively enabling access to the handlebar cavity via said ring member, wherein said apparatus is configured in use for at least enabling selective retrieval from the handlebar cavity of said storage unit with one hand of a user at least while the bicycle is in motion, said storage unit being in a stowed position accommodated within said handlebar cavity and wherein said ring member is configured for remaining fixedly secured to the external surface at least during said retrieval. Optionally, the storage unit may comprise a housing having a proximal end and a distal end and further defining an internal storage volume, wherein said distal end comprises a finger grip portion, and wherein said storage unit is configured having an absence of engagement arrangement for fixedly engaging the storage unit to the inside surface of the internal cavity.

According to the second aspect of the invention there is also provided a storage unit configured for being selectively stowed in and retrieved from an internal cavity of a bicycle handlebar via an open end of the handlebar that is in open communication with the internal cavity, the storage unit comprising a housing having a proximal end and a distal end and further defining an internal storage volume, wherein said distal end comprises a finger grip portion, and wherein said storage unit is configured having an absence of engagement arrangement for fixedly engaging the storage unit to the inside surface of the internal cavity. The storage unit can comprise an engagement portion intermediate said finger grip portion and said housing; the engagement portion can be configured for being releasably clamped by the apparatus while said finger grip portion is configured to be concurrently to be in facing relationship with an external portion of said apparatus and said housing is concurrently in said stowed position; the engagement portion can be configured for being folded over said ring member and clamped thereon; the housing can be configured having an absence of a discrete opening to said internal storage volume; optionally, said storage unit can configured for enabling access to said internal storage volume responsive to a destructive action carried out on said housing; further optionally, said storage unit comprises a weakened structure in the vicinity of said internal storage volume. Alternatively, said storage unit comprises a closable opening for accessing said storage volume.

In at least some of the above embodiments or other embodiments of the storage unit, said internal storage volume is configured for storing consumable products.

In at least some of the above embodiments or other embodiments of the storage unit, said internal storage volume comprises a lining configured for conserving consumable products that may be stored therein.

In at least some of the above embodiments or other embodiments of the storage unit, said housing is made from a material configured for conserving consumable products that may be stored in said internal storage volume.

In at least some of the above embodiments or other embodiments of the storage unit, said internal storage comprises a consumable product. For example, said consumable product comprises an energy product configured for enhancing athletic performance of the human body. For example, said consumable product is in the form of a gel, liquid drink, "chewables", "sports bar" and the like.

By way of non-limiting example, such gels may include energy gels as known in the art.

By way of non-limiting example, such liquid drink may include water, fruit juice, energy drink, coffee, and so on.

By way of non-limiting example, such "chewables" may include any edible or chewable matter, including toffees, sweets, chocolate drops and so on. For example such chewables may be of a size that are fully insertable into the mouth of the cyclist and are of a consistency that enable the cyclist to chew without the need to hold the remainder of the chewable.

By way of non-limiting example, such "sports bars" may include any edible matter in the form of a bar, including chocolate bars, cereal bars, and so on. For example such bars may be of a size that are at least partially insertable into the mouth of the cyclist and are of a consistency that enable the cyclist to bite a portion of the bar while holding the remainder of the bar.

At least some embodiments of present invention according to at least one of the above aspects provide a solution to the challenges associated with the retrieval by the cyclist of desired items, especially energy and nutritional products, particularly on the go when the rider is riding the bicycle at speed and requires to control the bicycle and/or maintain speed and/or change speed. These challenges are even more acute with road bikes, with the requirements for low bicycle weight, high cycling speeds and frequent intake of energy and nutritional products by the rider. Nevertheless, at least some embodiments of the present invention also provide for an apparatus that is also useful for longer term storage of items, e.g. non-perishable items, allowing simple storage and retrieval of the items, also when the bicycle is at a stop or parked.

At least some embodiments of present invention according to at least one of the above aspects provides access to substantially the full cross-section of the handlebar cavity, or close thereto, maximizing the potential for storing desired items therein and facilitating such stowage and retrieval thereof.

In at least some embodiments of present invention according to at least one of the above aspects, the apparatus of the invention may be factory-mounted to the bicycle handlebar, while in at least some other embodiments of present invention according to at least one of the above aspects the apparatus of the invention may be retrofitted to the bicycle handlebar.

Herein the term distal refers to a general forwards direction, i.e. the forward direction of the bicycle, while the term proximal refers to a general rearwards direction with respect to the forward direction of the bicycle.

While embodiments of the apparatus of the present invention are disclosed in the context of a bicycle, in particular a road bicycle, the invention also applies, *mutatis mutandis,* to other types of bicycles (for example hybrid bicycles, mountain bicycles, city bicycles, and so on) and also to similar road vehicles in which a handlebar or the like is used for steering and control and which comprises an internal handlebar cavity in open communication with an open end of the handlebar, the open end having an edge and an external surface. Thus, in a similar manner to that described herein for a bicycle handlebar, *mutatis mutandis,* the apparatus according to the first aspect of the invention is configured for being fixedly secured to the handlebar and comprising a ring member configured for being fixedly secured to the external surface of the open end of the handlebar and for selectively enabling access to the handlebar cavity via said ring member, wherein said apparatus is configured in use for facilitating at least retrieval of one or more items previously accommodated in the handlebar cavity via said ring member with one hand at least while the bicycle is in motion, and wherein said ring member is configured for remaining fixedly secured to the external surface at least during said retrieval. Other such road vehicles may comprise, for example, tricycles, wheelchairs, mopeds, motorcycles, and so on, each of which comprises, *mutatis mutandis,* the aforementioned internal handlebar cavity in open communication with an open end of the handlebar, the open end having an edge and an external surface.

Similarly, while embodiments of the apparatus of the present invention are disclosed in the context of a drop handlebar, in which the open end thereof is generally distal of the transverse portion thereof, they apply, *mutatis mutandis,* to drop handlebars in which the open end of the handlebar is generally proximal of the transverse portion, or indeed to any other type of handlebar, including straight handles bars, and so on, *mutatis mutandis.*

In at least some embodiments of the invention a rubber or cushioning layer already provided on the outer surface of the handlebar does not need to be removed for enabling the apparatus to be installed thereon.

Thus, according to at least some aspects of the invention, there is provided accessories for a bicycle or the like, and a method for accessing articles or items at least from a moving bicycle or the like.

### BRIEF DESCRIPTION OF THE DRAWINGS

In order to understand the invention and to see how it may be carried out in practice, embodiments will now be described, by way of non-limiting example only, with reference to the accompanying drawings, in which:
**Fig. 1** is an isometric view of an embodiment of the apparatus according to a first aspect of the invention mounted to a drop handlebar of a bicycle.
**Fig. 2** is a partial cut-away view of a part of a drop-handlebar including the embodiment of Fig. 1.
**Fig. 3** is a longitudinal cross-sectional isometric view of the embodiment of Fig. 1 with the cap member closed.
**Fig. 4** is a longitudinal cross-sectional isometric view of the embodiment of Fig. 1 with the cap member opened.
**Fig. 5** is an isometric view of the embodiment of Fig. 1 with the cap member closed.
**Fig. 6** is an isometric view of the embodiment of Fig. 1 with the cap member opened.
**Fig. 7** is longitudinal cross-sectional isometric view of the embodiment of Fig. 1 engaged to a handlebar and with the cap member opened.
Fig. 8 is another isometric view of the embodiment of Fig. 1 with the cap member opened.
**Figs. 9(a), 9(b), 9(c), 9(d), 9(e), 9(f)** are back, front, side, other side, top and bottom side views, respectively, of the embodiment of Fig. **1** with the cap member closed.
**Figs. 10(a), 10(b), 10(c), 10(d), 10(e), 10(f)** are back, front, side, other side, top and bottom side views, respectively, of the embodiment of Fig. 1 with the cap member opened.
**Fig. 11** is an isometric view of a first embodiment of the storage unit according to a second aspect of the invention of the invention, particularly configured for use with the embodiment of the apparatus of Fig. 1.
**Figs. 12(a), 12(b), 12(c), 12(d), 12(e), 12(f)** are back, front, side, other side, top and bottom side views, respectively, of the embodiment of Fig. 11.
**Fig. 13** is a plan view of a sheet material for forming the embodiment of Fig. 11. **Fig. 14** is an isometric view of the embodiment of Fig. 1 with the cap member opened and the embodiment of Fig. 11 accommodated in a handlebar.
**Fig. 15** is an isometric view of the embodiment of Fig. 1 with the cap member closed and the embodiment of Fig. 1 clamped thereto.
**Fig. 16** is top isometric view of a second embodiment of the storage unit according to a second aspect of the invention of the invention, particularly configured for use with the embodiment of the apparatus of Fig. 1.
**Fig. 17** side view of the storage unit of the embodiment of Fig. 16.
**Figs. 18(a)** and **18(b)** are top isometric and side views, respectively, of a second embodiment of the apparatus of the invention, with the cap member open; Fig. 18(c) is a cross-sectional side view of the embodiment of Fig. 18(a) taken along B-B.
**Fig. 19** is an isometric view of a third embodiment of the apparatus of the invention.
**Fig. 20** is an isometric view of the ring element of the embodiment of Fig. 19.
**Fig. 21** is an isometric view of a second embodiment of the storage unit of the invention, particularly configured for use with the embodiment of the apparatus of Fig. 20.
**Fig. 22** is an isometric cut-away view of the embodiment of Fig. 21 taken along A-A.
**Fig. 23** is a side view of a third embodiment of the storage unit of the invention, particularly configured for use with the embodiment of the apparatus of Fig. 20, comprising two storage units according to the embodiment of Fig. 21 serially joined to one another, and in which a second of the two storage units has the extended tab portion thereof longitudinally aligned with the ring element of the embodiment of Fig. 19.
**Figs. 24(a)** and **24(b)** are top/side isometric and top views, respectively, of the embodiment fourth embodiment of the apparatus of the invention with the cap member open; **Fig. 24(c)** is a side view of the embodiment of Fig. 24(a); **Fig. 24(d)** is a cross-sectional side view of the embodiment of Fig. 24(b) taken along C-C.

### DETAILED DESCRIPTION OF EMBODIMENTS

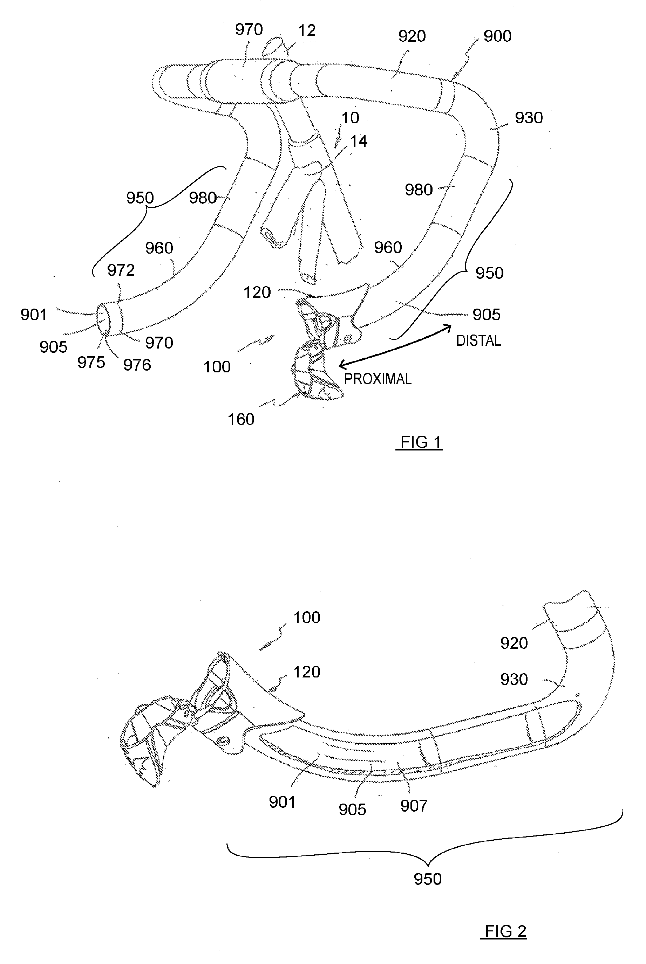

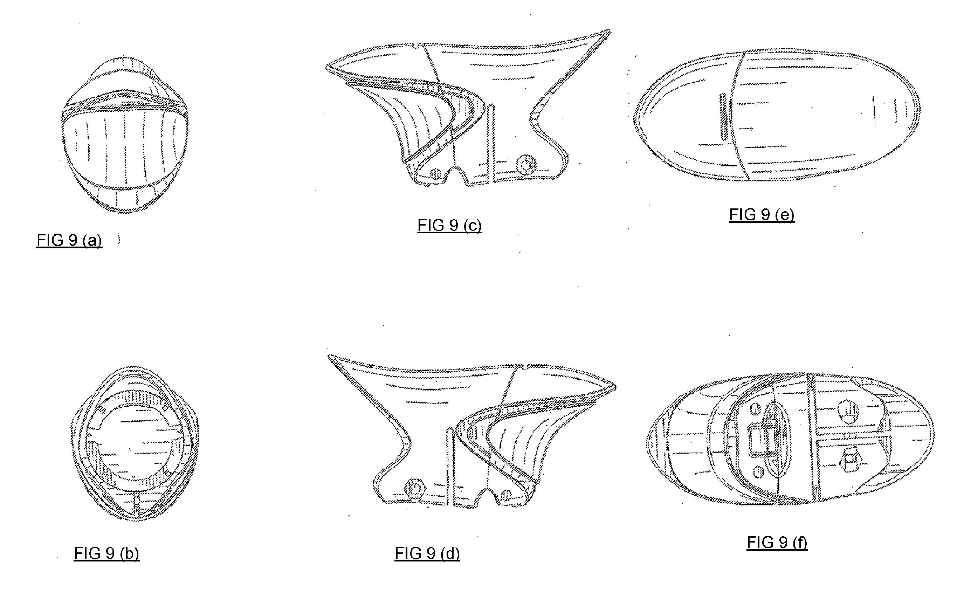

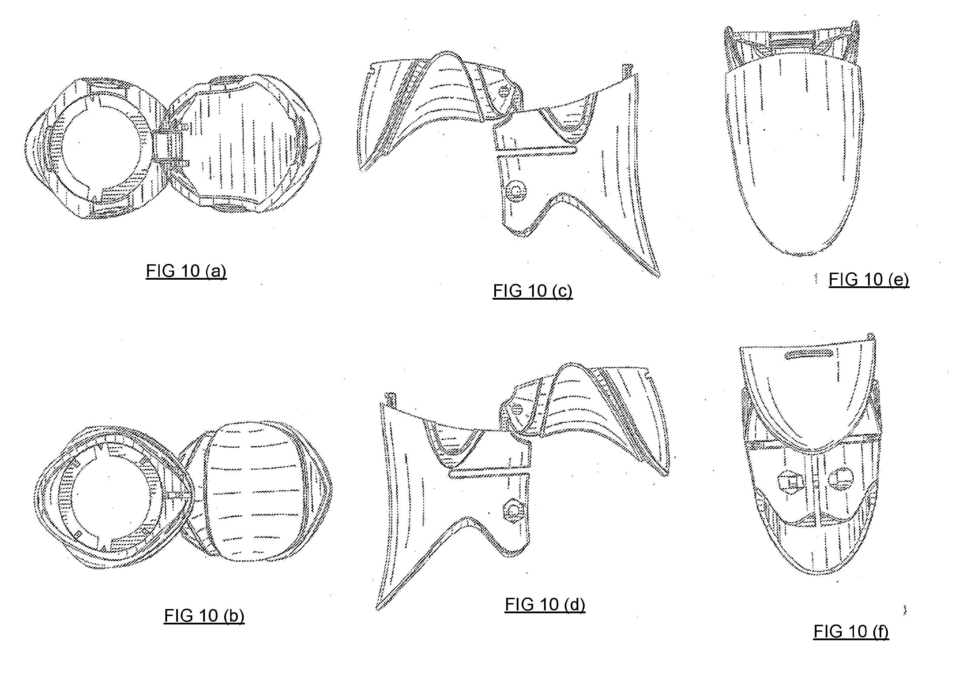

According to a first aspect of the invention, there is provided an apparatus (also referred to interchangeably herein as an accessory) for a bicycle handlebar. Referring to Figs. **1** to **10**(f), such an apparatus according to a first embodiment of the invention, generally designated **100**, and is configured for being fixedly secured to a handlebar 900 of a bicycle **10**.

Referring in particular to Figs. **1** and **2**, in this embodiment, the handlebar **900** is a drop handlebar commonly used for racing bicycles (referred to interchangeably herein as racing bikes, road bicycles or road bikes). The handlebar **900** has a generally tubular construction, and comprises a transverse portion **910** which is configured for being fixedly mounted to the steering strut **12** of the bicycle **10**, which is in turn pivotably mounted to the bicycle frame **14** and allows the front wheel to be rotatably affixed to the steering strut. At each lateral end of the transverse portion **910** two substantially orthogonal elbow portions **920, 930** connect the transverse portion **910** to the respective hand grips **950**. In this embodiment, the hand grips **950** are facing in a general aft direction with respect to the bicycle (i.e., the proximal direction with respect to the cyclist), though in alternative variations of this embodiment, the handlebar **900** may be turned by **180°** with respect to the bicycle, so that the hand grips **950** face in a general forward direction with respect to the bicycle, and thus in such a case the terms proximal and distal generally take the opposite meanings to those used herein..

Each hand grip **950** comprises a curved portion **960** including the end portion **970** of the handlebar **900**, and a mid-portion **980** between the curved portion **960** and the respective elbow portion **930**. The end portion **970** comprises an open end **976** of the respective hand grip **950** and has a free edge **975**.

The handlebar **900** is generally formed integrally as a single piece, though in alternative variations of this embodiment, the handlebar may instead be made of several portions suitably joined together.

The handlebar **900** comprises a handlebar cavity **901** that is in open communication with open end **976**. While in this embodiment the cavity extends from the open end **976** of one hand grip **950** to the open end of the other hand grip, in alternative variations of this embodiment the cavity may be a partial cavity with respect to one hand grip **950**, or comprises two separate partial cavities, one associated with each hand grip **950**, in each case each partial cavity extending inwardly from the open end of the respective handgrip up to and including the respective mid portion **960**, or up to and including the respective elbow portion **930**, or up to and including the respective elbow portion **920**, or up to and including part of the transverse portion **910**. While in general, the handlebar **900** comprises a circular cross-section, the present invention is not limited thereto and is also applicable, *mutatis mutandis,* to handlebars of different cross-section, for example oval, polygonal and so on.

Thus, the handlebar **900** comprises at least one primary cavity **905** extending inwardly from the open end **976** of the respective handgrip **950** up to and including the inside of the respective curved portion **960** and the respective mid portion **980**, and comprises an internal surface **907** defined by the inner surfaces of the respective curved portion **960** and the respective mid portion **980**. The end **970** of the respective handgrip **950** comprises an external surface **972** extending from the respective edge **975**.

While in at least this embodiment, one apparatus **100** is illustrated in Figs. **1** and **2** as being fixedly to the end **970** of one handgrip **950**, it will be appreciated that the handlebar **900** may optionally have two such apparatuses **100** fixedly attached thereto, one said apparatus **100** at each one of the two ends **970** of the handlebar.

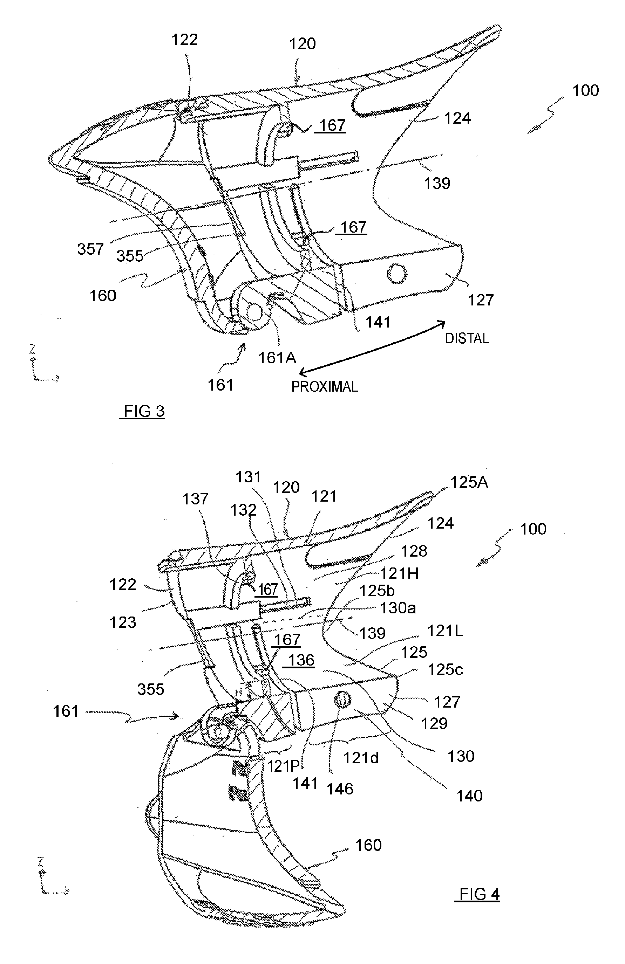

Referring also to Figs. **3** to **6**, the apparatus **100** comprises a ring member **120** configured for selectively enabling access to the handlebar cavity **901**, in particular the primary cavity **905**, via said ring member **120**, wherein the apparatus **100** is configured in use for facilitating at least retrieval of one or more items (also referred to interchangeably herein as articles or storage units) previously accommodated in a stowed position in the handlebar cavity **901**, in particular the primary cavity **905**, via said ring member **120** with one hand at least while the bicycle is in motion, and wherein said ring member **120** is configured for remaining fixedly secured to the external surface **972** at least during such retrieval.

Ring member **120** comprises a generally tubular casing **121** having a proximal, generally annular, open casing end **122**, a distal, generally annular, open casing end **124**, and a longitudinal axis **139**. A slightly scarffed proximal annular edge **123** circumscribes the proximal end **122**, and a distal edge **125** circumscribes the distal end **124**. In this embodiment, the distal edge **125** has a V-shaped profile when viewed from the side, in which the upper end **125a** of the distal edge **125**, projects the most distally, the distal edge **125** curving in a proximal direction to lateral end **125b** and thereafter projecting distally again towards lower end **125c** of the distal edge.**125**. As may be seen, upper end **125a** of the distal edge **125** projects further distally than the lower end **125c**. In alternative variations of this embodiment, the ring member may have a different form, for example a simple tubular configuration.

A longitudinal passageway or passage **136** is thus provided between the proximal casing end **122** and the distal casing end **124.**

The casing **121** is formed with a transverse slit arrangement **141,** in the form of a lower, generally semicircular, slit about midway between the proximal edge **123** and the lateral end **125c** of the distal edge **125,** essentially dividing the casing **121** into a proximal casing portion **121P** and a distal casing portion **121D.**

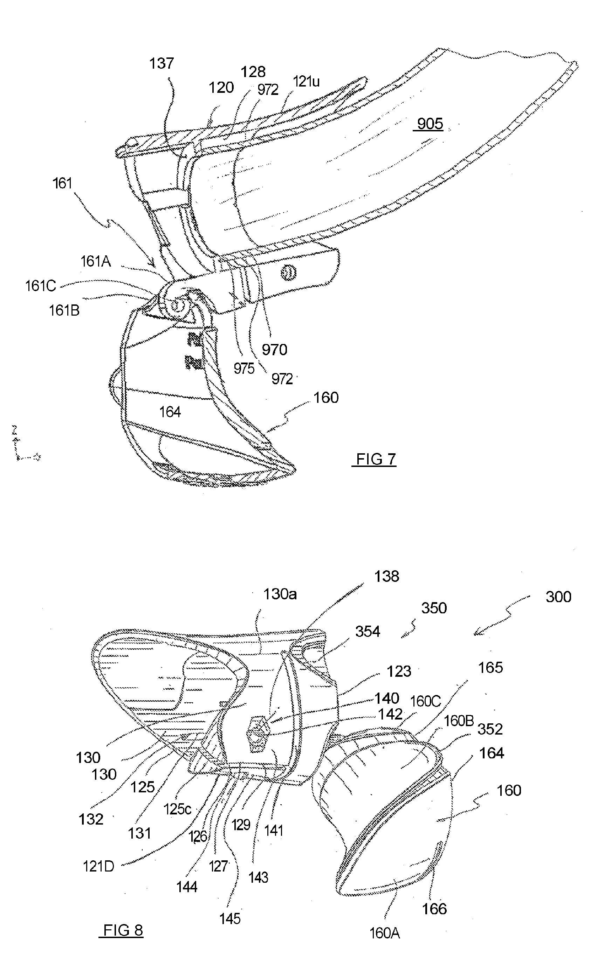

As best seen in Fig. **8**, the casing distal portion **121D** further comprises a generally longitudinal slit arrangement **129** extending between the lower end **125c** of distal edge **125** and the transverse slit arrangement **141** to define opposed longitudinal distal casing edges **126, 127.**

Referring in particular to Fig. **4****,** the casing distal portion **121D** thus comprises an upper half **121U**, joined to the casing proximal portion **121** P, and a lower half **121L** that is essentially split along slit arrangement **129**, dividing the lower half into two resilient casing portions **130,** each joined to the upper half **121U** at a respective axis **130a**. The two casing portions **130** can be reversibly pulled away from and pushed towards one another in a generally lateral direction by flexing about respective axes **130a**, which are generally parallel to the longitudinal axis **139**.

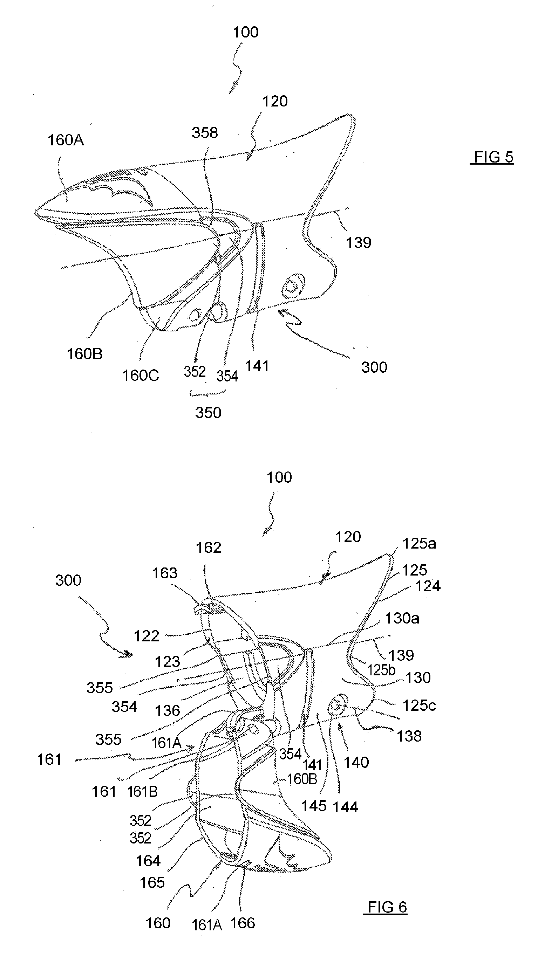

As best seen in Figs. **4****,** **6****,** **8****,** a locking arrangement **140** is provided for reversibly locking the longitudinal casing edges **126, 127** in mutual abutment, thereby closing the slit arrangement **129** and reducing the size of the cross-section of passage **136.** In this embodiment, the locking arrangement **140** comprises a locking screw **142** (Fig. **8****)**, rotatably mounted about a transverse axis **138** to one casing portion **130** on flange **143,** and engageable with nut **144** (Figs. **6****, 8)** provided via the other casing portion **130** on opposed flange **145,** the flanges **143, 145** having laterally aligned holes **146** to allow passage of the shank of the locking screw **142.**

Referring in particular to Figs. **4****,****7** and **8**, the casing distal portion **121D** comprises an inner, generally cylindrical, surface **128** that is configured for being securely fixed directly or indirectly onto the external surface **972.** In particular, the upper half **121U** comprises longitudinal ribs **132** inwardly projecting from the respective portions of the inner surface **128.** Each rib **132** has a cross-section that narrows from a relatively wide base at the inner surface **128** to a respective apex **131** distanced therefrom. The ribs **132** are resilient, or at least deformable, when a radial or lateral force is applied thereto. In alternative variations of this embodiment, the upper half **121U** and/or the casing portions **130** may have semi-annular rims inwardly projecting from the respective portions of the inner surface **128,** the rims also being resilient, or at least deformable, when a radial force is applied thereto.

Referring in particular to Figs. **4** and **7**, the casing proximal portion **121P** comprises a longitudinal stop **137** in the form of a split annular rim, proximal of the transverse slit arrangement **141,** that radially projects from inner surface **128** towards the longitudinal axis **139** to a height H.

Referring in particular to Fig. **7**, to fixedly secure the apparatus **100** onto the respective end **970** of the handlebar **900**, the locking arrangement **140** is unlocked or at least loosened, and the two casing portions **130** separated, by flexing about the respective axes **130a** to increase the effective internal diameter of the casing distal potion **121D** to a diameter substantially greater than the external diameter of the end **970.** Alternatively, the casing portions **130** may be biased to assume such an open position when the locking arrangement **140** is unlocked or at least loosened.

The open casing distal portion 121D is then placed in longitudinal overlying relationship with the respective end **970,** until the longitudinal stop **137** is in abutment with the respective edge **975.** Thereafter the two casing portions **130** are brought together so that the longitudinal casing edges **126, 127** are brought into mutual abutment and locked in place via the locking arrangement **140.** Concurrently, the inner surface **128** is brought closer to outer surface **972,** and ribs **132** are deformably and/or resiliently abutted onto the surface **972** to form a pressure and/or friction fit therewith, thereby fixedly securing the ring member **120** onto the end **970.**

In this embodiment the inside diameter of the longitudinal stop **137** is preferably not less than the internal diameter of the end **970,** and not greater than the external, diameter of the end **970.** Thus, the stop **137** is in overlying relationship with the edge **975** of end **970.** In alternative variations of this embodiment, the stop **137** may be replaced with radial protrusions radially projecting from inner surface **128** towards the longitudinal axis **139,** to a height H, for example.

As best seen in Figs. **3** and **4**, optional anchors in the form of longitudinal ribs **167** that project distally from the distal end of the longitudinal stop **137** and are inwardly projecting from the respective portions of the inner surface **128** of the casing proximal portion **121P**. The ribs **132** have a rounded distal end and are configured for being embedded onto a rubber layer or other cushioning layer often found covering the outer surface **972** (and often in the form of tape wound on the outer surface **972)**, and/or for being deformed and thereby clamping in place the edge **975** in abutment to the longitudinal stop **137.** Thus, in at least some embodiments of the invention according to the first aspect of the invention, such a rubber or cushioning layer already provided on the outer surface of the handlebar does not need to be removed for enabling the apparatus **100** to be installed thereon.

When the apparatus **100** is fixedly secured to the handlebar **900,** the ring member 120 provides access to the respective primary cavity **905** via open casing end **122,** and furthermore provides protection from edge **975,** which often is a relatively sharp edge.

The apparatus **100** further comprises an end cap member **160,** which in this embodiment is hingedly connected to the ring member **120** via lower hinge arrangement **161.** Referring in particular to Figs. **6** and **7**, hinge arrangement **161,** in this embodiment, comprises a distal hinge bracket **161A** projecting proximally from the lower part of edge **123,** a proximal hinge bracket **161B** formed on the corresponding lower part of the end cap member **160,** and a hinge pin **161C** pivotably interconnecting between distal hinge bracket **161A** and the proximal hinge bracket **161B**. In alternative variations of this embodiment, the hinge arrangement may instead comprise, for example, a film hinge, or any other suitable hinge arrangement.

End cap member **160** is configured for selectively and reversibly closing the open casing end **122,** in particular using only one hand, and at least when the bicycle is in motion.

Referring in particular to Figs. **5**, **6** and **8**, end cap member **160** comprises an upper portion **160A,** having the general form of a heraldic shield when viewed from above (and in fact may optionally be decorated with a logo, trademark, alphanumeric characters (for example the name and/or other particulars of the bike owner), for example), a lower portion **160C** including the proximal hinge bracket **161B**, and a saddle-shaped middle portion **160B**. The end cap member **160** defines an internal cavity **164** and a peripheral distal edge **165,** configured for abutting onto proximal edge **123** of the ring member **120.**

Referring in particular to Figs **6** and **8****,** ring member **120** comprises a locking tab **162** projecting distally from the distal edge **123** at an upper position thereon. The locking tab **162** is configured for locking with respect to slot **166** provided in the upper portion **160A** of end cap member **160** when the end cap member **160** is in the closed position with respect to the ring member **120,** illustrated in Fig. **5****,** for example. The locking tab **162** is resilient and comprises an engagement end **163** that is configured for engaging with respect to the slot **166** to provide a "click fit" closure for the end cap member **160** with respect to the ring member **120.** By applying a downward and proximal pressure on the upper portion **160A,** the engagement end **163** may be "unclicked" from the slot **166,** enabling opening the end cap member **160** with respect to the ring member **120** with one finger of one hand of the cyclist, typically the thumb. The shield-shaped upper portion **160A** is thus configured to facilitate applying pressure by the tip of a finger, typically a thumb, so that the end cap member **160** may be clicked to the closed position with the finger (typically thumb) of one hand of the cyclist, at least when the bicycle is moving.

(It is to be noted that for the sake of clarity the terms proximal and distal when applied to the end cap member are generally associated with the closed position thereof.)

The apparatus **100** is further configured for facilitating securing and retrieval of an item that is configured for being reversibly accommodated in the primary cavity **905** and having an elongate proximal gripping portion (also referred to interchangeably herein as the finger grip portion) that projects from the main body or housing of the item that defines its respective internal storage volume. A clampable engagement portion is provided intermediate the proximal gripping portion and the housing, and thus the gripping portion, the engagement portion and the housing are in serial relationship.

As will become clearer herein, apparatus **100** comprises a clamping arrangement **300** that enable the aforesaid engagement portion to be automatically clamped to the apparatus **100** when the end cap member **160** is closed while concurrently compelling the gripping portion to be in facing relationship with an outside of the apparatus **100** and the housing is in the stowed position, and for the aforesaid engagement portion to be automatically unclamped from the apparatus **100** when the end cap member **160** is opened, allowing the item to be retrieved from the respective primary cavity **905** by gripping the gripping portion and pulling the item out of the respective primary cavity **905** via the gripping portion.

In the illustrated embodiment, the clamping arrangement **300** comprises a pair of clamps **350,** either one of which may be used for engaging one or more such items. Each clamp **350** further comprises a respective first clamping member (comprised on the end cap member **160)** that is configured for selectively clamping with respect to the respective second clamping member (that is comprised on the ring member **120)** to clamp therebetween the engagement portion of the respective item or items.

Referring to Figs. **5, 6** and **8** in particular, each clamp **350** comprises a respective first clamping member in the form of a clamping wing or clamping tab **352** that projects distally from the respective side of the saddle-shaped middle portion **160B,** beyond the edge **165** of the end cap member **160.** Further, each clamp **350** comprises a respective second clamping member in the form of in the form of a clamping pad **354** recessed on the side of outer wall of the casing **121.**

As best seen in Figs. **3** and **4**, the proximal edge **355** of each recess is indented distally with respect to the proximal edge **123,** forming a narrow opening **357** when the end cap member **160** is in the closed position, and is thereby configured for allowing the aforesaid gripping portion of the stored item to project from and inside of the ring member **120,** for the engagement portion to be folded over the edge **355,** and for the folded gripping portion to assume an overlying or facing position with respect to the clamping pad **354** when the end cap member **160** is in the open position. When the end cap **160** is closed onto the ring member **120,** each clamping tab **352** overlies onto the respective clamping pad **354** and provides a small gap **358** (Fig. **5****)** therebetween to enable one or more engagement portions of respective items to be clamped therebetween.

In alternative variations of this embodiment, the end cap member may have a different form, for example a simple tubular or disc-like configuration, and including suitable clamping arrangement compatible with the ring member, for example.

It is to be noted that by being fixedly secured to the outer surface **972** of the handlebar end **970,** the open casing end **122** allows open communication with substantially the full transverse cross-section of the handlebar cavity **901,** in particular substantially the full transverse cross-section of primary cavity **905.** An item having an external diameter up to just under the internal diameter of the primary cavity **905** and having a proximal gripping portion may be stored in the primary cavity **905** for later retrieval by the cyclist, while ring member **120** remains fixedly secured to the handlebar **900**, and thus does not require dismantling of the apparatus **100** or part thereof in order to access the stored item.

Thus, in operation of this embodiment, such an item may be stored within the primary cavity **905,** such that the gripping portion of the item is projecting distally from gap **358** when the end cap member **160** is closed.

Optionally, a permanent or semi-permanent distal stop (not shown) may be provided within the primary cavity **905,** unconnected to the apparatus **100,** to prevent the item from being introduced further into the primary cavity **905.** The end cap member **160** may be closed, thereby clamping the item to the apparatus while the main body (i.e. housing) of the item is accommodated in primary cavity **905.** When the cyclist wishes to retrieve the item, the cyclist can click open the end cap member **160** using a finger or thumb to press the upper portion **160A** in a generally proximal/downward direction, thereby unclamping the engagement portion of the item, which the cyclist can grasp the gripping portion with a finger and thumb of the same hand that was used for opening the apparatus **100.**

Thus, retrieval of the stored item from the primary cavity **905** may be achieved by one hand of the cyclist even when the bicycle is in motion, since cyclist are routinely capable of controlling a bicycle with only one hand (the other hand in this case), even when cycling at great speed. Furthermore, since during such retrieval the cyclist's hand remains close to the respective handlebar end **975,** it enables the cyclist to regain control of the bicycle with this hand almost instantaneously, should he need to, and moreover there is no significant danger of this hand colliding with an adjacent cyclist, pedestrian or other structure, and thus enables the cyclist to retrieve the item even when there are other cyclists in close proximity.

The structure of the apparatus also allows the cyclist to close the primary cavity **905** by clicking closed the end cap member **160** onto the ring member **120,** by first pivoting the end cap member **160** into alignment with the ring member **120** with one hand, and then pushing the end cap member **160** to click close with a finger or thumb. Thus, closure of the apparatus can also be performed by the cyclist with one hand and when on the go.

It is to be noted that in alternative variations of this embodiment, the end cap member **160** may be omitted from the apparatus **100,** and the ring member **120** remains open. In such cases the stored item may be held in the stowed position inside the primary cavity **905** until it is retrieved, and reversibly clamped or otherwise reversibly affixed to the ring member **120.** For example, hooks may be provided on the outer surface of the ring member 120, and the gripping portion of the item may have a hole, or one may be formed therein by impaling the gripping portion onto a hook. To retrieve the item, the user can unhook the gripping portion from the hook, or simply tear off the gripping portion from the hook, and pull out the item. Alternatively, for example, the ring member 120 may comprise a hand clamp mounted to or separate from the ring member 120, and the hand clamp is configured for clamping the aforesaid gripping end of the item, and for enabling unclamping thereof using only one hand.

In the first embodiment and in at least some alternative variations thereof, the apparatus 100 is configured for being fixedly secured to a handlebar having a conventional inner diameter of 20.5mm, and is thus retrofittable onto many existing conventional handlebars and/or may be factory-fitted onto new bicycles having handlebars of such conventional inner diameter.

In at least some other alternative variations of this embodiment, though, the handlebar may be manufactured in a size greater than the aforementioned conventional size, for example having the internal diameter larger than the conventional 20.5mm diameter. For example, such an increased internal diameter may be up to 5%, 10%, 15%, 20%, 25%, 30%, 35%, 40%, 45%, 50%, 60%, 70%, 80%, 90%, 100% larger, or larger, providing respective internal diameters of 21.525mm, 22.55mm, 23.575mm or 24.6mm, 25.625mm, 26.65mm, 27.675mm, 28.7mm, 29.725mm, 30.75mm, 32.8mm, 34.85mm, 36.9mm, 38.95mm, 41 mm, or greater, respectively. In these or other alternative variations of this embodiment, though, the handlebar may be manufactured with, or may be modified to have, an external screw thread, bayonet fit, or other engagement means on the external surface 972, that is complementary to an internal thread, bayonet mount or other complementary engagement means provided on the ring member 120, enabling the ring member to be fixedly secured to the external surface 972 of the end 970 by simple hand manipulations, optionally without the need for tools; in such cases the ring member 120 may omit the locking arrangement 140.

The apparatus 100 may be made from any suitable materials or combination of materials, including plastics, polymers, composites, metals, wood and so on.

According to a second aspect of the invention, there is provided an item (also referred to interchangeably herein as an article) configured for being retrievably accommodated in an inside of handlebar 900 of a bicycle 10.

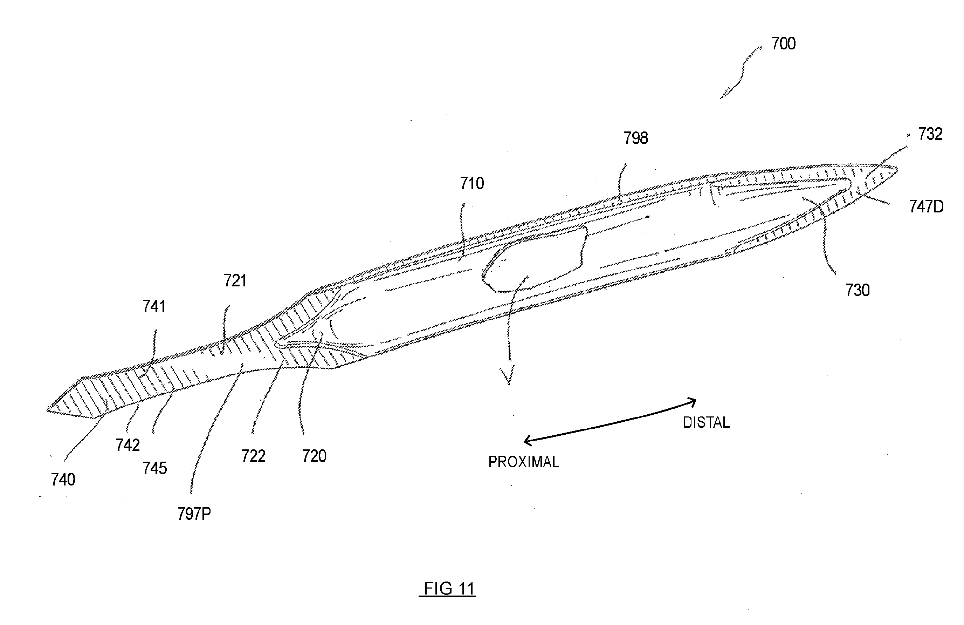

Referring to Figs. 11 to 13, a first embodiment of an item in the form of a storage unit, designated with the reference numeral 700, is per se novel, and while particularly configured for use with the apparatus according to the illustrated embodiment or alternative variations thereof, according to the first aspect of the invention, may be used with other apparatuses that may be configured for being fixed to the end of the handlebar *900, mutatis mutandis,* and/or may be used as a stand-alone storage unit that may be accommodated, for example, in a pocket or elsewhere.

The storage unit 700 is configured for being selectively stowed in and retrieved from the internal cavity 901, in particular the primary cavity 905, of the bicycle handlebar 900 via the open end 976 of the handlebar 900 that, as has already been discussed, is in open communication with the internal cavity 901, in particular primary cavity 905. The storage unit 700 comprises an elongate, generally tubular housing 710 having a proximal end wall 720 and a distal end wall 730, and further defines an internal storage volume V therein. The storage unit 700 is configured having an absence of engagement arrangement for fixedly engaging the storage unit to the inside surface, i.e. internal surface 907, of the internal cavity 905.

The distal end wall 730 fishtails distally to a short pointed distal tab 732. Proximal end wall 720 fishtails proximally to an elongate pointed proximal tab 722 that is centrally disposed with respect to the proximal end wall 720.

The proximal tab 722 has a gripping portion 740 at the proximal end thereof and an engagement portion 721 at a distal end thereof next to the housing 710. The gripping portion 740 is configured for projecting to an outside of the handlebar 900 when the tubular housing 710 is accommodated fully or partially within the internal cavity 901, in particular the primary cavity 905 (for example, a proximal part of the tubular housing 710 may be accommodated in the proximal casing portion 121P and possibly also in the internal cavity 164 of the end cap member 160). The gripping portion 740 is contiguous with engagement portion 721, and together are in the form of an extended tab portion 745, which is contiguous with and proximally projecting from the proximal tab 722 in Fig.11, for example. The proximal end wall 720 is, in this embodiment, tearable from the tubular housing 710 responsive to the application of a suitable force, for example a suitable shear force, to allow access to the volume V, and thus to the contents thereof.

The storage unit 700 is thus constructed so that such a shearing force or other force may be generated, for example, by holding the housing 710 with one hand, and the extended tab portion 745 or proximal tab 722 with the other hand or the teeth, and pulling the housing 710 away from the extended tab portion 745 or proximal tab 722. In particular, the materials from which the storage unit 700 is constructed may be chosen to ensure that an average force generated in this manner is sufficient to tear off the extended tab portion **745** together with end wall **720** away from the tubular housing **710.**

In alternative variations of this embodiment, the storage unit comprises a weakened structure in the vicinity of the internal storage volume, for example a weakened or perforated line or a notch may be provided between the proximal end wall **720** and the tubular housing **710.**

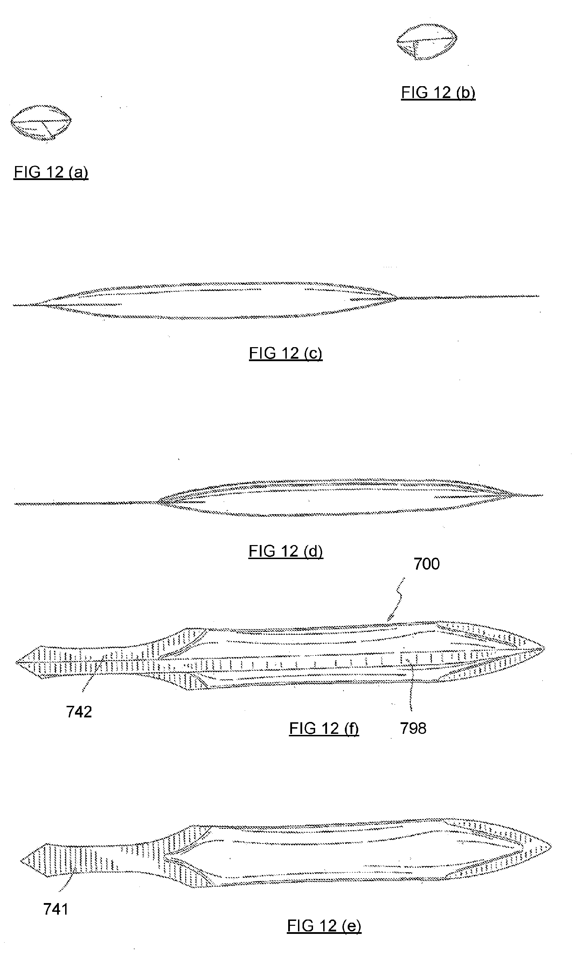

Gripping portion **740** in the form of extended tab portion **745** comprises an upper face **741** and a lower face **742** (Figs. **11**, **12**(e), **12**(f)), each being dimensioned to be graspable by one or another of a finger and thumb of one hand to enable the cyclist to retrieve the storage unit **700** with one hand even while cycling, while at the same time being sufficiently small to fit partially within the cavity **901,** or at least primary cavity **905,** when the storage unit **700** is in the stowed position.

In this embodiment, the storage unit **700** is formed as an integral unit, and thus the housing **710,** distal end wall **730** and said proximal end wall **720** are integrally formed, together with the proximal tab **722,** and extended tab portion **745.** In alternative variations of this embodiment, the storage unit may instead be formed in several parts suitably joined together.

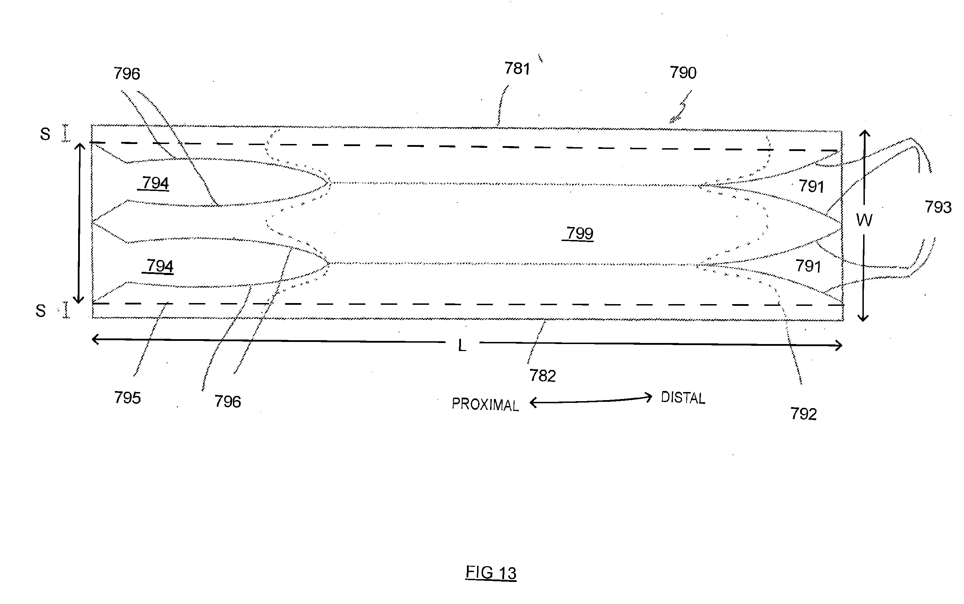

In particular, and referring also to Fig. **13**, the storage unit **700** may be configured as a sachet, formed from a rectangular sheet **790** of suitable material such as for example a suitable laminate.

Sheet **790** has a length L and width W, a distal end **792** and a proximal end **795.** Generally triangular-shaped distal portions **791** (with two curved sides) are cut out from the distal end **792** to define edges **793** that correspond to the edges of distal tab **732.** Similarly, generally ogive-shaped proximal portions **794** are cut out from the proximal end **795** to define edges **796** that correspond to the edges of the proximal tab **722** and extended tab portion **745.** The remaining form **799** of the sheet **790** after the distal portions **791** and the proximal portions **794** are removed is sealed along a longitudinal fin seal **798** (see Figs. **11** and **12**(f)) by sealing together width s of longitudinal edges **781, 782** of the form **799,** to form a generally cylindrical structure. Then, the distal end of the form **799** is sealed at a distal transverse seal **797D,** defined by edges **793,** to form distal tab **732.** Similarly, the proximal end of the form **799** is sealed at a proximal transverse seal **797P,** defined by edges **796,** to form proximal tab **722** and extended tab portion **745.** Prior to forming one or the other of the proximal transverse seal **797P** or the distal transverse seal **797D,** the internal volume V may be filled with suitable contents, for example.

Such sealing may include, by way of non-limited example, one or more of heat welding, ultrasonic welding, suitable adhesives, and so on.

By way of non-limiting example, length L can be about **220**mm and width W can be about **60**mm; width **s** of each one of longitudinal edges **781, 782** can be about **5**mm.

In this embodiment, the internal storage volume is configured for storing consumable products, and the internal storage volume V can be lined with a lining configured for conserving consumable products that may be stored therein. In alternative variations of this embodiment, the storage unit **700**, in particular the housing **710,** is made from a material configured for conserving consumable products that may be stored in the internal storage volume.

In at least this embodiment, the storage unit **700** is made from disposable materials and is disposed of after use.

According to this embodiment, the internal storage volume V comprises a consumable product, for example an energy product configured for enhancing athletic performance of the human body. In this embodiment, the housing **710** is formed as an elongate generally cylindrical reservoir, for storing a liquid or gel, and the consumable product is in the form of a drink or gel, respectively. Many examples of such drinks and gels are known in the art and are generally suitable for being stored in the storage unit **700.**

In alternative variations of this embodiment, the housing **710** may be configured for storing non-flowable matter, such as solids, and such consumable products may be in the form of "chewables", "sports bars" and so on as known in the art. In such embodiments, when the extended tab portion **745** is ripped off, it fully opens up the internal storage volume, and enables the solid consumable to be removed from the package.

Furthermore, in this embodiment, the storage unit **700,** and in particular the housing **710,** has an absence of a discrete closable opening to the internal storage volume or a closure therefor, and thus once opened remains open.

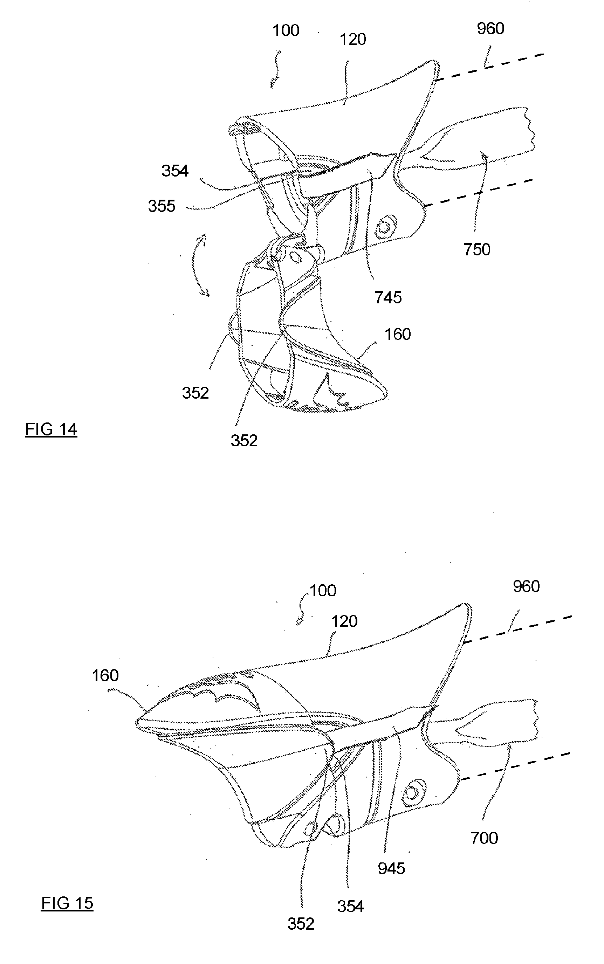

Referring also to Figs. **14** and **15****,** the storage unit **700** is particularly configured for being selectively engaged and disengaged with respect to the apparatus **100**, in particular for being selectively clamped and unclamped with respect to one or another of the two clamps **350** of the apparatus **100.**

In order to engage the storage unit **700** with the apparatus **100** in the stowed position, the end cap **160** is opened, as disclosed above, and the storage unit **700** is inserted into the primary cavity **905** such that the extended tab portion **745** projects proximally from the open proximal casing end **122**. The tab portion **745**, in particular the engagement portion **721,** is then folded over the proximal edge **355** of one recess **354,** so that at least a part of the tab portion **745** including the gripping portion is now pointing in a general distal direction and is in general overlying relationship or in facing relationship with an external surface of the ring member **120,** i.e. with respect to an outside of the apparatus **100.** Thereafter, the end cap **160** may be closed, and the respective clamping tab **352** automatically clamps the tab portion **745,** i.e. the engagement portion **721,** onto the clamp recess **354,** while compelling the gripping portion to remain outside of the apparatus **100**

While such stowage of the storage unit **700** may be accomplished with one hand and while on the go, it is envisaged that the cyclist will normally stow the storage unit **700** in the handlebar **900** prior to commencing cycling or whenever else the bicycle is at rest.

Retrieval and use of the storage unit **700** may be accomplished by the cyclist using one hand, and also while cycling, for example as follows. First, the end cap **160** is opened with one hand, as already disclosed above. The extended tab portion **745** (i.e. the gripping portion) is grasped by one hand, typically via a finger and thumb of the cyclist's hand, and the storage unit **700** may be pulled out by the cyclist while still grasping the extended tab portion **745**. The storage unit **700** can be manipulated so that the hand (the same hand, or alternatively the storage unit **700** can be transferred to the other hand instead) is now holding the housing **710,** and the extended tab portion **745** is free. The extended tab portion **745** may now be gripped by the teeth of the cyclist, for example, and a shearing force induced between the extended tab portion **745** and the remainder of the storage unit **700,** by pulling the storage unit **700** away so that the extended tab portion **745** is and proximal end **722** is ripped off or torn open from the storage unit **700.** Thus, the storage unit **700** is configured for enabling access to the internal storage volume V responsive to a destructive action carried out on the storage unit.

The internal storage volume V is now in communication with the outside of the storage unit **700,** and allows the user to suck out any fluid contents or gel contents (or indeed any other type of contents therein, for example powder, solids, etc) thereof, for example via oral suction applied to the opening **728,** or by squeezing the contents out by squeezing the housing **710.**

Once the storage unit **700** is removed, the end cap **160** may be closed again if desired.

It is readily understood that the storage unit **700** may be clamped to one or the other of the two clamps **350.**

It is also readily understood that, depending on the specific dimensions of the storage unit **700,** more than one storage unit **700** may be accommodated in the within the internal cavity **901,** in particular the primary cavity **905,** and that one or more such storage units **700** may be clamped by each one of the two clamps **350,** for example in juxtaposed or overlying relationship. In such cases, the user may choose to retrieve all the storage units **700** at the same time, or to retrieve one storage unit at a time, inbetween closing the apparatus **100** via end cap member **160** while mainlining clamped the remaining storage units with respect to the apparatus **100.**

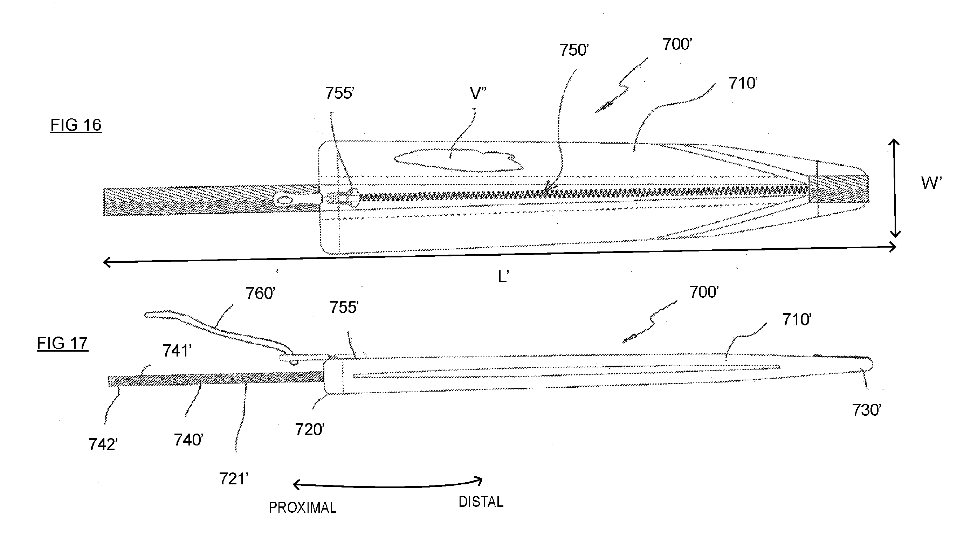

Referring to Figs. **16** and **17****,** a second embodiment of said item, also in the form of a storage unit, is designated with the reference numeral **700',** and is similar to the first embodiment of storage unit **700,** with some differences, *mutatis mutandis,* as will become clearer hereinbelow.

As with the first embodiment, the storage unit **700'** is also per se novel, and while particularly configured for use with the apparatus according to the illustrated embodiment or alternative variations thereof, according to the first aspect of the invention, may be used with other apparatuses that may be configured for being fixed to the end of the handlebar ***900,** mutatis mutandis,* and/or may be used as a stand-alone storage unit that may be accommodated, for example, in a pocket or elsewhere.

The storage unit **700'** is thus also configured for being selectively stowed in and retrieved from the internal cavity **901,** in particular the primary cavity **905,** of the bicycle handlebar **900** via the open end **976** of the handlebar **900.** The storage unit **700'** comprises an elongate housing **710'** having a proximal end wall **720'** and a distal end wall **730'**, and further defines an internal storage volume V" therein. The storage unit **700'** is configured having an absence of engagement arrangement for fixedly engaging the storage unit to the inside surface, i.e. internal surface **907**, of the primary cavity **905.**

While in this embodiment the housing **710'** has a generally rectangular cross-section, in other variations of this embodiment the housing **710'** may instead have any other suitable cross-section, for example circular, elliptical, polygonal, corrugated, etc.

The distal end wall **730'** fishtails distally to a generally rounded end. Proximal end wall **720'** comprises a gripping portion **740'** at the end thereof, and at least a proximal part of the gripping portion **740'**, is configured for projecting to an outside of the handlebar **900** when the housing **710'** is accommodated fully or partially within the internal cavity **901,** in particular the primary cavity **905** (for example, a proximal part of the housing **710'** may be accommodated in the proximal casing portion **121** P and possibly also in the internal cavity **164** of the end cap member **160)**.

The gripping portion **740'** is in the form of strip of material proximally projecting from the end wall **720'**, for example. In alternative variations of this embodiment, the gripping portion **740'** may instead be in the form of a chord, string, chain, flexible tab, and so on.

Gripping portion **740'** comprises an upper face **741'** and a lower face **742',** each being dimensioned to be graspable by one or another of a finger and thumb of one hand to enable the cyclist to retrieve the storage unit **700'** with one hand even while cycling, while at the same time being sufficiently small to fit partially within the cavity **901,** or at least primary cavity **905,** when the storage unit **700'** is in the stowed position. In alternative variations of this embodiment, the proximal end of the gripping portion **740'** comprises a loop, ring, or the like dimensioned to enable one or another of a finger and thumb of one hand to be at least partially inserted therein to enable the cyclist to retrieve the storage unit **700'** with one hand even while cycling, while at the same time the engagement portion **721'** (which is intermediate the gripping portion and the housing) being sufficiently small to fit partially within the cavity **901,** or at least primary cavity **905,** when the storage unit is in the stowed position.

In this embodiment, the storage unit **700'** is configured as a reusable storage unit, and in particular is further configured for selectively opening and closing access to its internal volume V". Such access is provided via a longitudinal opening, which may be opened or closed via a closure arrangement, which in this embodiment is in the form of a zipper **750**' having a slider **755'** that slides longitudinally over the zipper teeth from a distal end to a proximal end thereof to close the zipper and thus said longitudinal opening, and slides back towards the distal end of the zipper to open the longitudinal opening. The storage unit **700'** further optionally comprises a pulling chord **760'** attached to the slider **755'.**

In alternative variations of this embodiment, the storage unit **700',** in particular the housing **710'**, comprises different closure means, for example studs, Velcro, buttons, etc., and/or the opening is not necessarily longitudinal. For example, the opening may comprise a partial or full circumferential opening, or any other suitable configuration.

In this embodiment, the storage unit **700'** may be formed in several parts suitably joined together. In alternative variations of this embodiment, the storage unit may instead be formed as an integral unit, and thus the housing **710',** distal end wall **730'** and said proximal end wall **720'** are integrally formed, together with the gripping portion **740'**, and the zipper **750'** is subsequently attached to the housing **710'.**

By way of non-limiting example, length L' of the storage unit **700'** may be about **220**mm and width W' can be about **60**mm.

In this embodiment, the internal storage volume is configured for water-proof storing of products, and the internal storage volume V" can be lined with a water-proof lining. In alternative variations of this embodiment, the storage unit **700',** in particular the housing **710',** is made from a water-proof material.

According to this embodiment, the internal storage volume V" comprises one or more retrievable items, for example documents, money, or even consumable products, for example an energy product configured for enhancing athletic performance of the human body, wherein the consumable is wrapped in as suitable wrapper..

As with the first embodiment of the storage item, in the second embodiment the storage item **700**' is particularly configured for being selectively engaged and disengaged with respect to the apparatus **100,** in particular for being selectively clamped and unclamped with respect to one or another of the two clamps **350** of the apparatus **100.** Thus, in order to engage the storage unit **700'** with the apparatus **100** in the stowed position, the end cap **160** is opened, as disclosed above, and the storage unit **700'** is inserted into the primary cavity **905** such that a proximal part of the gripping portion **740'** projects proximally from the open proximal casing end **122.** The proximal part of the engagement portion **721'** is the folded over the proximal edge **355** of one recess **354,** so that proximal part of the gripping portion **740'** is now pointing in a general distal direction and is in general overlying relationship with or at least in facing relationship with, an external surface of the ring member **120,** i.e., an outside of the apparatus. Thereafter, the end cap **160** may be closed, and the respective clamping tab **352** automatically clamps the engagement portion **721'** onto the clamp recess **354.**

While such stowage of the storage unit **700'** may be accomplished with one hand and while on the go, it is envisaged that the cyclist will normally stow the storage unit **700'** in the handlebar **900** prior to commencing cycling or whenever else the bicycle is at rest.

Retrieval and use of the storage unit **700'** may be accomplished by the cyclist using one hand, and also while cycling, for example as follows. First, the end cap **160** is opened with one hand, as already disclosed above, and thus unclamps the engagement portion **721'.** The gripping portion **740'** is grasped by one hand, typically via a finger and thumb of the cyclist's hand, and the storage unit **700'** may be pulled out by the cyclist while still grasping the gripping portion **740'.** The storage unit **700'** can be manipulated so that the hand (the same hand, or alternatively the storage unit **700'** can be transferred to the other hand instead) is now holding the housing **710',** and the slider **755'** (or the free end of chord **760'**) may now be gripped by the teeth of the cyclist, for example, and a longitudinal force induced between the slider **755'** and the remainder of the storage unit **700'**, by pulling the storage unit **700'** away so that the zipper **750'** slides distally to open from the storage unit **700.**

The internal volume V" is now in communication with the outside of the storage unit **700"**, and allows the user to take out any of the contents thereof, for example via the mouth or the other hand.

Once the storage unit **700'** is removed, the end cap **160** may be closed again if desired.

It is readily understood that the storage unit **700'** may be clamped to one or the other of the two clamps **350**.

It is also readily understood that, depending on the specific dimensions of the storage unit **700'**, more than one storage unit **700'** (and/or a combination of one or more storage units **700** and one or more storage units **700'**) may be accommodated in the internal cavity **901**, in particular the primary cavity **905,** and that one or more such storage units **700'** (and/or storage unit **700**) may be clamped by each one of the two clamps **350,** for example in juxtaposed or overlying relationship. In such cases, the user may choose to retrieve all the storage units at the same time, or to retrieve one storage unit at a time, inbetween closing the apparatus **100** via end cap member **160** while mainlining clamped the remaining storage units with respect to the apparatus **100.**

It is readily understood that the disclosed embodiment of the storage unit **700,** or alternative variations thereof, of the storage unit **700',** or alternative variations thereof, may also be used with different systems associated with the handlebars.

Conversely, the disclosed embodiment for apparatus **100** can also be used in conjunction with different types of items or storage units. For example, a storage unit dimensioned to fit within the internal cavity **901**, in particular the primary cavity **905,** and such a storage unit can comprise a string that is clamped by the clamp **350** and is further used for retrieving the a storage unit when the end cap **160** is opened and the string is unclamped.

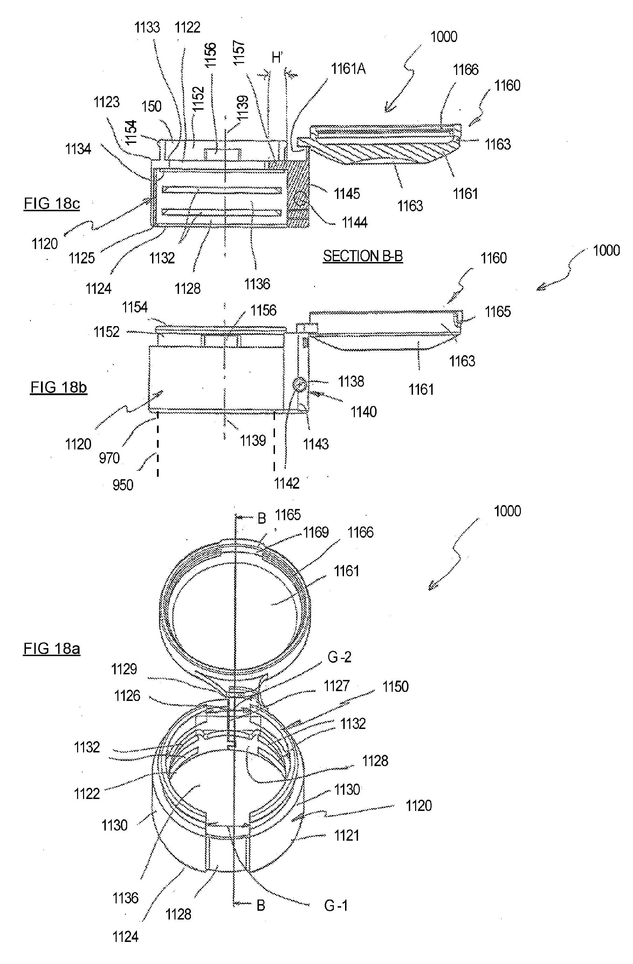

Also according to the first aspect of the invention, and referring to Figs. **18(a)** to **18**(c), an apparatus (also referred to interchangeably herein as an accessory) for a bicycle handlebar according to a second embodiment of the invention, generally designated **1000,** is configured for being fixedly secured to the aforementioned handlebar **900** of a bicycle **10,** as has already been disclosed for the first embodiment and with reference to Figs. **1** and **2****,** *mutatis mutandis.*

As in the first embodiment, *mutatis mutandis,* while one apparatus **1000** may be fixedly to the end **970** of one handgrip **950,** it will be appreciated that the handlebar **900** may optionally have two such apparatuses 1000 fixedly attached thereto, one said apparatus **1000** at each of the two ends **970** of the handlebar.

The apparatus **100**0 comprises a ring member **1120** configured for selectively enabling access to the handlebar cavity **901,** in particular the primary cavity **905,** via said ring member **1120**, wherein the apparatus **1000** is configured in use for facilitating at least retrieval of one or more items (also referred to interchangeably herein as articles) previously accommodated in the handlebar cavity **901,** in particular the primary cavity **905,** via said ring member **1120** with one hand at least while the bicycle is in motion, and wherein said ring member **1120** is configured for remaining fixedly secured to the external surface **972** at least during such retrieval.

Referring in particular to **Fig. 18**(a) to **Fig. 18**(c), ring member **1120** comprises a generally tubular casing **1121** having a proximal, generally annular, open casing end **1122,** a distal, generally annular, open casing end **1124,** and a longitudinal axis **1139.** A proximal annular edge **1123** circumscribes the proximal end **1122,** and a distal annular edge **1125** circumscribes the distal end **1124.** A longitudinal passageway or passage 1136 is thus provided between the proximal casing end **1122** and the distal casing end **1124.**

Referring in particular to **Fig. 18**(a), the casing **1121** is formed with a generally longitudinal slit arrangement **1129** extending between the two edges **1123, 1125** to define opposed longitudinal casing edges **1126, 1127.** The casing **1121** further comprises a longitudinal flexible section **1128,** diametrically opposite the slit arrangement **1129.** Thus, the casing **1121** comprises two generally C-shaped casing halves **1130** longitudinally joined to one another via the flexible section **1128,** which allows the two halves **1130** to be reversibly pulled away from one another by flexing about an axis parallel to the longitudinal axis **1139.** For example, flexible section **1128** may comprise a film hinge.

A locking arrangement **1140** is provided for locking the longitudinal casing edges **1126, 1127** in mutual abutment, thereby closing the slit arrangement **1129.** In this embodiment, the locking arrangement **1140** comprises a locking screw **1142,** rotatably mounted about a transverse axis **1138** to one casing half **1130** on flange **1143,** and engageable with an internally threaded well **1144** provided in the other casing half 1130 on opposed flange **1145.** Thus, as the locking screw **1142** is turned in one direction when engaged in the well **1144** the two longitudinal casing edges **1126, 1127** are locked together. Conversely, as the locking screw **1142** is turned in the other direction, the longitudinal casing edges **1126, 1127** are separated, effectively increasing the internal diameter of the casing **1121** and thus also increasing the size of the cross-section of passage **1136.**

The casing **1121** comprises an inner generally cylindrical surface **1128** that is configured for being securely fixed onto the external surface **972.** In particular, each casing half **1130** has two semi-annular rims **1132** inwardly projecting from the respective portions of the inner surface **1128.** Each rim **1132** has a cross-section that narrows from a relatively wide base at the inner surface **1128** to an apex **1131** distanced therefrom. The rims **1132** are resilient, or at least deformable, when a radial force is applied thereto.

The casing **1121** further comprises a longitudinal stop **1137** that radially projects from inner surface **1128** towards the longitudinal axis **1139** to a height H', as best seen in **Fig. 18**(c). In some alternative variations of this embodiment, longitudinal stop **1137** may be omitted.

To fixedly secure the apparatus **1000** onto the respective end **970** of the handlebar **900,** the locking arrangement **1140** is unlocked and the two casing halves **1130** separated, by flexing about the longitudinal flexible section **1128,** to increase the effective internal diameter of the casing **1121** to a diameter much greater than the external diameter of the end **970.** The open casing **1121** is then placed in longitudinal overlying relationship with the respective end **970,** until the longitudinal stop **1137,** or at least the distal-facing annular shoulder **1134** that projects inwardly from inner surface **1128,** is in abutment with the respective edge **975.** Thereafter the two casing halves 1130 are brought together so that the longitudinal casing edges **1126, 1127** are brought into mutual abutment and locked in place. Concurrently, the inner surface **1128** is brought closer to outer surface **972,** and rims **1132** are deformably and/or resiliently abutted onto the surface **972** to form a pressure and/or friction fit therewith, thereby fixedly securing the ring member **1120** onto the end **970.**

When the apparatus **1000** is fixedly secured to the handlebar **900,** the ring member **1120** provides access to the respective primary cavity **905** via open casing end **1122,** and furthermore provides protection from the relatively sharp edge **975,** which often is a relatively sharp edge.

The open casing end **1122** comprises a proximally projecting structure **1150** that has one or more purposes.

Referring in particular to **Figs. 18**(b) and **18**(c), structure **1150** comprises, on each casing half **1130,** a respective C-shaped wall **1152,** longitudinally projecting proximally from the open end **1122,** and having an enlarged lip portion **1154** at the proximal end thereof. Each wall **1152** comprises a lateral opening **1156** therethrough, the purpose of which will become clearer below. When the apparatus **1000** is fixedly secured to the handlebar **900,** the lateral free ends of one C-shaped wall **1152** are laterally separated from the respective lateral free ends of the other C-shaped wall **1152** via lateral gaps G1 and G2, as illustrated in **Fig. 18**(a), for example.

Furthermore, and referring in particular to **Fig. 18**(c), it is to be noted that the open end **1122** comprises, in addition to the a distal-facing annular shoulder **1134** that projects inwardly from inner surface **1128** and is configured for abutting onto edge **975** of the handlebar. It is also to be noted that the open end **1122** comprises a proximal-facing annular shoulder **1133** that projects inwardly from the C-shaped walls **1152.**

The apparatus **1000** further comprises an end cap member **1160,** which in this embodiment is hingedly connected to the ring member **1120** via hinge **1161A,** which may be, for example, a film hinge, or any other suitable hinge. End cap member **1160** comprises an end wall **1161** configured for substantially covering the open casing end **1122,** and a peripheral wall **1163** depending from the end wall **1161** and which is configured for locking onto structure **1150,** when the end cap member **1160** is in the closed position with respect to the ring member **1120**. Referring in particular to **Figs. 18**(a) and **18**(c), the peripheral wall **1163** comprises a partial annular rim **1166** that is configured for engaging with respect to the enlarged portion **1154** of structure **1150** to provide a "click fit" closure for the end cap member **1160** with respect to the ring member **1120.** A tab **1165** on the peripheral wall **1163** facilitates "unclicking" the closure and opening the end cap member **1160** with respect to the ring member **1120** with one finger of one hand of the cyclist, typically the thumb. The outer surface of the end wall **1161** has an indentation **1168** shaped to accommodate the tip of a finger, typically a thumb, so that the end cap member **1160** may be clicked to the closed position with the finger (typically thumb) of one hand of the cyclist.

It is to be noted that by being fixedly secured to the outer surface **972** of the handlebar end **970,** the open casing end **1122** allows open communication with substantially the full transverse cross-section of the handlebar cavity **901**, in particular substantially the full transverse cross-section of primary cavity **905.** An item having an external diameter up to just under the internal diameter of the primary cavity **905** and having a proximal finger-gripping portion may be stored in the primary cavity **905** for later retrieval by the cyclist, while ring member **1120** remains fixedly secured to the handlebar **900,** and thus does not require dismantling of the apparatus **1000** or part thereof in order to access the stored item.

Thus, in operation of this embodiment, such an item may be stored within the primary cavity **905,** such that the finger-gripping portion of the item is projecting proximally of proximal annular edge **1123**. Optionally, a permanent or semi-permanent distal stop (not shown) may be provided within the primary cavity **905,** unconnected to the apparatus **1000,** to prevent the item from being introduced further into the primary cavity **905**. The end cap member **1160** may be closed, thereby preventing the item from falling out of the primary cavity **905**. When the cyclist wishes to retrieve the item, the cyclist can click open the end cap member **1160** using a finger or thumb to press the tab **1165** in a generally proximal direction, thereby exposing the finger gripping portion of the item, which the cyclist can grasp with a finger and thumb of the same hand that was used for opening the apparatus **1000.**

Thus, retrieval of the stored item from the primary cavity **905** may be achieved by one hand of the cyclist even when the bicycle is in motion, since cyclist are routinely capable of controlling a bicycle with only one hand (the other hand in this case), even when cycling at great speed. Furthermore, since during such retrieval the cyclist's hand remains close to the respective handlebar end **972,** it enables the cyclist to regain control of the bicycle with this hand almost instantaneously, should he need to, and moreover there is no significant danger of this hand colliding with an adjacent cyclist, pedestrian or other structure, and thus enables the cyclist to retrieve the item even when there are other cyclists in close proximity.

The structure of the apparatus also allows the cyclist to close the primary cavity **905** by clicking closed the end cap member **1160** onto the ring member **1120,** by first manipulating the end cap member **1160** into alignment with the ring member **1120** with one hand, and then pushing the end cap member **1160** to click close with a finger or thumb. Thus, closure of the apparatus can also be performed by the cyclist with one hand and when on the go.

It is to be noted that in alternative variations of this embodiment, the end cap member **1160** may be omitted, and the ring member **1120** remains open. In such cases the stored item may be held in the stowed position inside the primary cavity **905** until it is retrieved, in a number of ways. For example, the body of the item may be in frictional contact with the internal surface **907,** though not fixedly secured thereto. The frictional contact prevents the item from sliding out, but may be overcome by the pulling force provided by the cyclist when the cyclist wishes to retrieve the item. On the other hand the ring member **1120** prevents injury to the cyclist from edge **975** when retrieving the item. Thus, no mechanical arrangement or other mechanism is required to keep the item in place or for releasing it to the cyclist, which can retrieve it with one hand, and while on the go.

In the second embodiment and in at least some alternative variations thereof, the apparatus **1000** is configured for being fixedly secured to a handlebar having a conventional inner diameter of **20.5**mm, and is thus retrofittable onto many existing conventional handlebars and/or may be factory-fitted onto new bicycles having handlebars of such conventional inner diameter.

In at least some other alternative variations of this embodiment, though, the handlebar may be manufactured in a size greater than the aforementioned conventional size, for example having the internal diameter larger than the conventional **20.5**mm diameter. For example, such an increased internal diameter may be up to **5%**, **10**%, **15%**, **20%**, **25%**, **30%**, **35%**, **40%**, **45%**, **50%**, **60%**, **70%**, **80%**, **90%**, **100%** larger, or larger, providing respective internal diameters of **21.525**mm, **22.55**mm, **23.575**mm or **24.6**mm, **25.625**mm, **26.65**mm, **27.675**mm, **28.7**mm, **29.725**mm, **30.75**mm, **32.8**mm, **34.85**mm, **36.9**mm, **38.95**mm, **41** mm, or greater, respectively. In these or other alternative variations of this embodiment, though, the handlebar may be manufactured with, or may be modified to have, an external screw thread, bayonet fit, or other engagement means on the external surface **972,** that is complementary to an internal thread, bayonet mount or other complementary engagement means provided on the ring member **1120,** enabling the ring member to be fixedly secured to the external surface **972** of the end **970** by simple hand manipulations, optionally without the need for tools; in such cases the ring member **1120** may omit the locking arrangement **1140.**

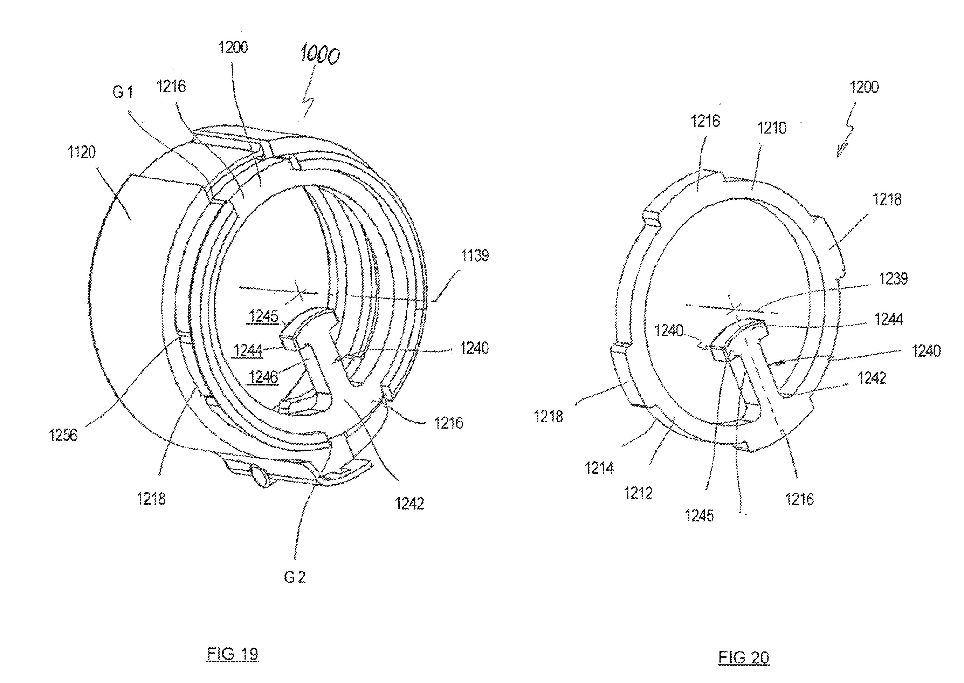

In a third embodiment of the invention, and referring to Figs. **19** and **20****,** the apparatus **1000,** as disclosed for the second embodiment and alternative variations thereof, *mutatis mutandis,* is configured for being selectively engaged with at least one storage unit at least when the storage unit is in a stowed position accommodated within the internal cavity **901,** in particular the primary cavity **905,** in use of said apparatus **1000.** In particular, in the third embodiment the apparatus **1000** is further configured for enabling selectively disengaging at least one item from the apparatus to facilitate retrieval of the item from the primary cavity **905** in use of the apparatus.

In the third embodiment, the apparatus **1000** further comprises a ring-shaped carrier, also referred to herein as ring element **1200,** that is engaged with or fixedly secured to the ring member **1120** at least during use. Ring element **1200** comprises an annular ring portion **1210** having a flat proximal annular face **1212** and a flat distal annular face **1214.** The ring portion **1210** further comprises a first pair of lateral tabs **1216** projecting laterally in diametrically opposite directions, and are configured for being accommodated in gaps G1, G2 respectively when the ring element **1200** is engaged with the ring member **1120.** Further, ring portion **1210** also comprises a second pair of lateral tabs **1218** projecting laterally in diametrically opposite directions, but different from the projection directions of the first pair of lateral tabs **1216,** and are configured for being accommodated in the respective lateral openings **1156** when the ring element **1200** is engaged with the ring member **1120**.When the ring element **1200** is thus engaged with the ring member **1120,** the distal face **1214** is in abutment with shoulder **1133** (see also **Fig.18**(c)).

The ring element **1200** further comprises a strut member **1240** comprising a strut base **1242** and a free end **1244,** the strut member being inwardly cantilevered from a periphery of the ring element **1210,** which in use of the apparatus is distal of the open end **1122** and of the end **970** of the handlebar. The strut member **1240** is configured for reversibly engaging with a distal end of the item being selectively stored and retrieved from the primary cavity **905,** which in turn is configured for reversibly engaging with the strut member **1240.** The strut member **1240** radially projects from the strut base **1242** towards a longitudinal centerline of said ring member **1200,** i.e., the longitudinal axis **1139,** though in this embodiment the free end **1244** does not reach the longitudinal axis **1139.**

The free end **1244** comprises an enlarged portion **1245,** and further comprises a narrower neck portion **1246** intermediate the enlarged portion **1245** and the strut base **1242.**

While in this embodiment the strut member **1240** is integrally formed on the ring element **1200,** in alternative variations of this embodiment the strut member **1240** may be suitably joined to the ring element **1200**.

In yet other alternative variations of this embodiment, the strut member may be formed integrally with or is joined directly to the ring member **1120,** without the need for the ring element **1210** which can then be omitted. In such embodiments, the strut member is inwardly cantilevered from a periphery of an outer-facing annular edge of the ring member **1120,** which in use of the apparatus **1000** is distal of the open end of the handlebar.

In yet other alternative variations of this embodiment, the ring element **1200** may be formed integrally with or is joined directly to the ring member **1120,** but without the need for tabs **1216** and tabs **1218,** which can then be omitted - for example the ring element **1200** may be bonded or welded to the ring member **1120.**

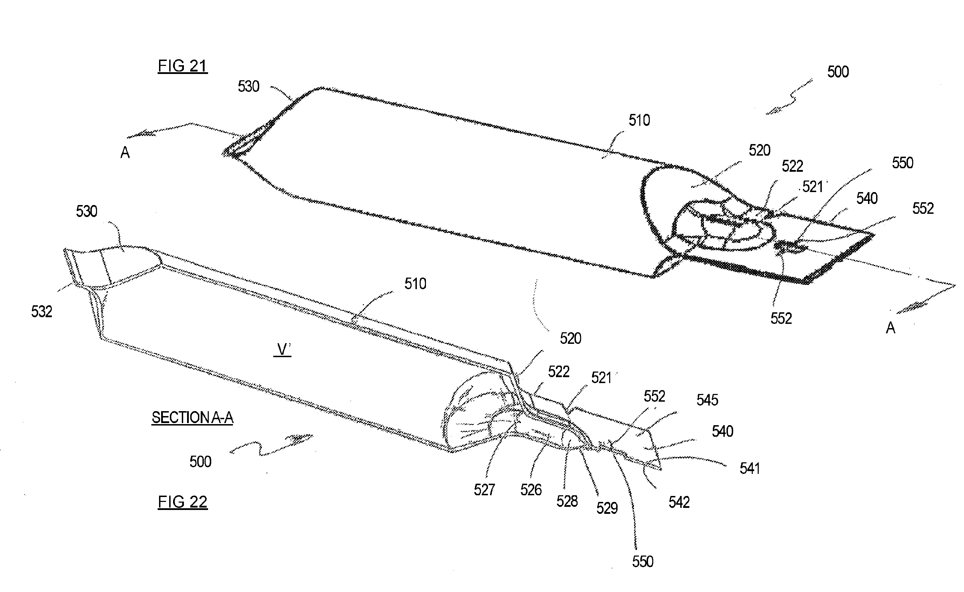

Referring to Figs. **21** and **22****,** a second embodiment of an item in the form of a storage unit according to the second aspect of the invention, and designated with the reference numeral **500,** is per se novel and is particularly configured for use with the apparatus according to the third embodiment of the invention or alternative variations thereof.

The storage unit **500** is configured for being selectively stowed in and retrieved from the internal cavity **901,** in particular the primary cavity **905,** of the bicycle handlebar **900** via the open end **976** of the handlebar **900** that, as has already been discussed, is in open communication with the internal cavity **901,** in particular primary cavity **905**. The storage unit **500** comprises an elongate, generally tubular housing **510** having a proximal end wall **520** and a distal end wall **530,** and further defines an internal storage volume V'. The storage unit **500** is configured having an absence of engagement arrangement for fixedly engaging the storage unit to the inside surface, i.e. internal surface **907,** of the primary cavity **905.**

The distal end wall **530** fishtails distally to a distal tab **532** that is centrally disposed with respect to the distal end wall **530**. Similarly, proximal end wall **520** fishtails proximally to a proximal tab **522** that is also centrally disposed with respect to the proximal end wall **520**.

The proximal end wall **520** has a finger grip portion **540,** configured for being accommodated fully or partially within the internal cavity **901,** in particular the primary cavity **905,** when the storage unit **500** is stowed therein. The finger grip portion **540** is in the form of an extended tab portion **545** contiguous with and proximally projecting from the proximal tab **522.** The proximal end wall **520** further comprises an access tube **526** having a distal end **527** in open communication with the internal storage volume V' and a proximal end **528** that is closed via a removable cap **529,** which in this embodiment is tearable therefrom responsive to the application of a suitable shear force. The proximal tab **522** extends proximally the longitudinal length of the tube **526** and is integrally formed therewith. The storage unit comprises a weakened structure in the vicinity of the internal storage volume V', in the form of a lateral notch **521**. The cap **529** is at the distal end of extended tab portion **545** and is integrally formed therewith, and lateral notch **521** is provided between proximal tab **522** and extended tab portion **545.** While the proximal tab **522,** extended tab portion **545,** access tube **526** and cap **529** are formed as an integral unit, the notch **521** enables the extended tab portion 545 together with cap **529** to be easily torn away from the proximal tab **522** and access tube **526** when a shearing force is applied thereat. The storage unit **500** is constructed so that such a shearing force may be generated, for example, by holding the housing **510** with one hand, and the extended tab portion **545** with the other hand or the teeth, and pulling the housing **510** away from the extended tab portion **545.** In particular, the materials from which the storage unit **500** is constructed, and the particular geometry of the notch **521** may be chosen to ensure that an average shearing force generated in this manner is sufficient to tear off the extended tab portion **545** together with cap **529** away from the proximal tab **522** and access tube **526.**

In alternative variations of this embodiment, a weakened structure, wherein the storage unit comprises a weakened structure in the vicinity of said internal storage volume, for example a weakened or perforated line, may be provided between the proximal tab **522** and the extended tab portion **545** instead of or in addition to notch **521.**

Finger grip portion or extended tab portion **545** comprises an upper face **541** and a lower face **542,** each on the one hand being sufficiently large to be grasped by a finger and thumb of one hand to enable the cyclist to retrieve the storage unit **500** with one hand even while cycling, while on the other hand being sufficiently small to fit partially or fully within the cavity **901,** or at least primary cavity **905**, when the storage unit is in the stowed position.

The storage unit **500** is configured for being selectively engaged and disengaged with respect to strut member **1240** of the apparatus **1000**. In the illustrated embodiment storage unit **500** comprises an opening **550** formed in the extended tab portion **545** that is selectively releasably engageable with respect to the free end **1244** of strut member **1240**. In particular, the opening **550** is nominally smaller than the cross-section of the enlarged portion **1245**, and is reversibly deformable to allow the extended tab portion **545** to be forced over the enlarged portion **1245** and subsequently engaged at neck portion **1246.** A periphery of the opening **550** is deformable to allow reversible expansion of said opening. In particular, there are two pre-formed cuts **552,** one on each lateral side of the opening **550,** which thereby attains a cruciform shape, and the tab material in the vicinity of the cuts **552** reversibly deform when the extended tab portion **545** is forced over the enlarged portion **1245.**

In this embodiment, at least the proximal tab **522** and extended tab portion **545** are resilient, and have a datum unstressed position generally aligned with the longitudinal axis **1139,** when the storage unit **500** is inserted in the primary cavity **905** such that the opening **550** is in overlying relationship with the strut member **1240.** Thus, in this unstressed position, the extended tab portion **545** is above the enlarged member **1245** and not in any engaging contact therewith.

Thus, in order to engage the storage unit **500** with the apparatus **1000** in the stowed position, the storage unit **500** is first inserted in the primary cavity **905** such that the opening **550** is in overlying relationship with the strut member **1240,** and thereafter the extended tab portion **545** is forced over the enlarged portion **1245** and is subsequently engaged at neck portion **1246.** Thereafter, the end cap **1160** may be closed. While such stowage of the storage unit **500** may be accomplished with one hand and while on the go, it is envisaged that the cyclist will stow the storage unit **500** in the handlebar **900** prior to commencing cycling or whenever else the bicycle is at rest.

In this embodiment, the storage unit **500** is formed as an integral unit, and thus the housing **510,** distal end wall **530** and said proximal end wall **520** are integrally formed, together with the proximal tab **522,** extended tab portion **545,** access tube **526** and cap **529**. In alternative variations of this embodiment, the storage unit may instead be formed in several parts suitably joined together.

In this embodiment, the internal storage volume is configured for storing consumable products, and the internal storage volume V' is lined with a lining configured for conserving consumable products that may be stored therein. In alternative variations of this embodiment, the storage unit **500,** in particular the housing **510,** is made from a material configured for conserving consumable products that may be stored in the internal storage volume.

In at least this embodiment, the storage unit **500** is made from disposable materials and is disposed of after use.

According to the third embodiment, the internal storage volume V' comprises a consumable product, for example an energy product configured for enhancing athletic performance of the human body. In this embodiment, the housing **510** is formed as an elongate generally cylindrical reservoir, for storing a liquid or gel, and the consumable product is in the form of a drink or gel, respectively. Many examples of such drinks and gels are known in the art and are generally suitable for being stored in the storage unit **500**.

In alternative variations of this embodiment, the housing **510** may be configured for storing non-flowable matter, such as solids, and such consumable products may be in the form of "chewables", "sports bars" and so on as known in the art. In such embodiments, the storage unit does not require the access tube **526,** but is otherwise used in a similar manner to that disclosed herein, *mutatis mutandis,* so that when the extended tab portion **545** is ripped off, it fully opens up the internal storage volume, and enables the solid consumable to be removed from the package.

Furthermore, in this embodiment, the storage unit **500,** and in particular the housing **510,** has an absence of a discrete closable opening to the internal storage volume or a closure therefor, and thus once opened remains open.

Retrieval and use of the storage unit **500** may be accomplished by the cyclist using one hand, and also while cycling, for example as follows. First, the end cap **1160** is opened with one hand, as already disclosed for the second embodiment *mutatis mutandis.* (It is to be noted, though, that in some alternative variations of the third embodiment the apparatus **1000** may omit the end cap **1160,** and thus cap opening and cap closing steps are not required.) Then, the extended tab portion **545** is grasped by one hand, typically via a finger and thumb of the cyclist's hand, and the extended tab portion **545** is forced back by the cyclist over the enlarged portion **1245** and away at neck portion **1246,** thereby disengaging the storage unit **500** from the strut element **1240.** The natural resilience of the proximal tab **522** and extended tab portion **545** returns the extended tab portion **545** to the datum unstressed position aligned with the longitudinal axis **1139** and thus above the strut element **1240.** At this point, the storage unit **500** may be pulled out by the cyclist while still grasping the extended tab portion **545,** and manipulated so that the hand is now holding the housing **510,** and the extended tab portion **545** is free. The extended tab portion **545** may now be gripped by the teeth of the cyclist, for example, and a shearing force induced between the extended tab portion **545** and the remainder of the storage unit **500,** by pulling the storage unit **500** away so that the extended tab portion **545** is ripped off or torn away from the proximal tab **522** due to the concentration of stress at the notch **521,** also removing the cap **529** from tube **526.** Thus, the storage unit **500** is configured for enabling access to the internal storage volume V' responsive to a destructive action carried out on the storage unit.

The internal volume V' is now in fluid communication with the outside of the storage unit **500**, and allows the user to suck out any fluid or gel contents thereof via oral suction applied to the opening **528,** or to squeeze such fluid or gel contents out by squeezing the housing **510**.

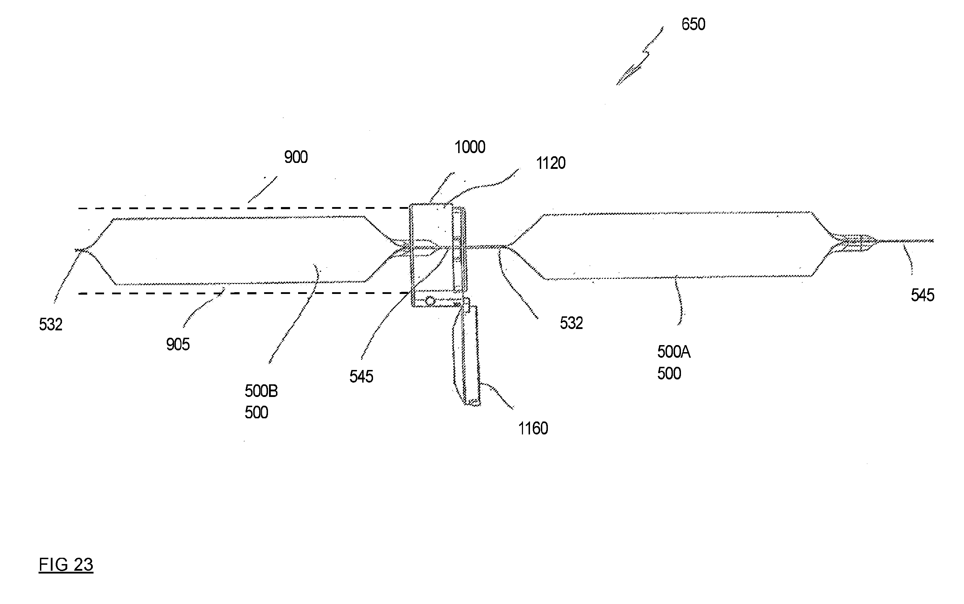

In a third embodiment of the stored item or storage unit according to the invention, and referring to Fig. **23**, the storage unit **500,** as disclosed for the second embodiment and alternative variations thereof, *mutatis mutandis,* is further configured for being temporarily connected with a second such storage unit **500**. Thus in the third embodiment a storage unit chain **600** is provided, comprising two (or more) storage units **500** serially joined so that the distal tab **532** of the proximal storage unit **500** (also marked in Fig. **23** as **"500A"**) is connected to the extended tab portion **545** of the distal storage unit **500** (also marked in Fig. **23** as **"500B"**) by a weakened structure such as a series of perforations or notches, for example.

In order to engage the storage unit chain **600** with the apparatus **1000,** the two joined storage units **500A, 500B** are first inserted in the primary cavity **905** such that the opening **550** of the proximal storage unit **500A** is in overlying relationship with the strut member **1240**, and thereafter the extended tab portion **545** is forced over the enlarged portion **1245** and is subsequently engaged at neck portion **1246.** Thereafter, the end cap **1160** may be closed. While such stowage of the storage unit **500** may be accomplished with one hand and while on the go, it is envisaged that the cyclist will stow the storage unit **500** in the handlebar **900** prior to commencing cycling.

Retrieval and use of each of the storage units **500A, 500A** is similar to that disclosed above for a single storage unit **50b**0 with one main difference, *mutatis mutandis,* and may be accomplished by the cyclist using one hand, and also while cycling. First, the proximal storage unit **500A** is retrieved in a similar manner to that disclosed above for a single storage unit **500,** *mutatis mutandis,* but prior to removing and opening the proximal storage unit **500A**, the distal storage unit **500B** is engaged to the apparatus **1000** for later retrieval. This may be done as follows, for example. Referring to Fig. **23**, when the proximal storage unit **500A** is fully extracted from the primary cavity **905** and the cyclist maneuvers the storage unit chain **600** with the hand that is holding the proximal storage unit **500A** so that the extended tab portion **545** of the distal storage unit **500B** is now in overlying relationship with the strut member **1240,** and thereafter this extended tab portion **545** is forced over the enlarged portion **1245** and is subsequently engaged at neck portion **1246** by further manipulations of the proximal storage unit **500A**. Thereafter, a shearing force may be applied between the proximal storage unit **500A** being held with one hand, and the distal storage unit **500B** that is now engaged by the apparatus **1000,** and this results in the distal tab **532** of the proximal storage unit **500A** tearing or ripping away from the extended tab portion **545** of the distal storage unit **500B** at perforations **590.**

Thereafter, the end cap **1160** may be closed. The thus retrieved proximal storage unit **500A** may then be opened with one hand and on the go, as disclosed above for the single storage unit **500,** *mutatis mutandis.* The distal storage item **500B** may be retrieved and opened whenever desired, by one hand and on the go, as disclosed above for the single storage unit **500,** *mutatis mutandis.*

While such stowage of the storage unit chain **600** may be accomplished with one hand and while on the go, it is envisaged that the cyclist will stow the storage unit **500** in the handlebar **900** prior to commencing cycling.

In alternative variations of this embodiment, the storage unit chain **600** may comprise more than two storage units **500** serially joined to each other, one after the other and serially retrieved one at a time, in a similar manner to that disclosed for the embodiment illustrated in Fig. 23, *mutatis mutandis.*

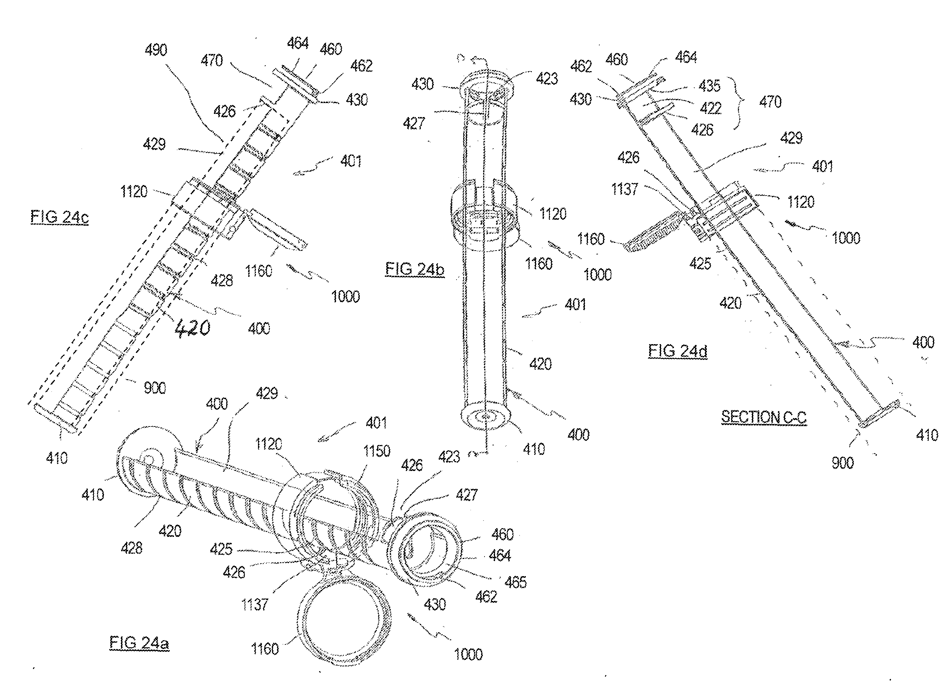

In a fourth embodiment according to the first aspect of the invention, and referring to Figs. **24**(a) to **24**(d), the apparatus **1000,** as disclosed for the second embodiment and alternative variations thereof of the first aspect of the invention, *mutatis mutandis,* is further configured for being selectively engaged with at least one storage unit **401** at least when the storage unit is in a stowed position accommodated within the internal cavity **901,** in particular the primary cavity **905,** in use of said apparatus **1000.** In particular, in the fourth embodiment, the apparatus **1000,** in particular the ring member **1120,** is further configured for being selectively engaged with the storage unit **401** when the storage unit is in a (partially or fully) deployed position at least partially outside of the internal cavity in use of said apparatus.

In the fourth embodiment, the storage unit **401** is selectively slidingly displaceable between the stowed position and the deployed position, and the storage unit **401** is configured for allowing at least retrieval of at least one stored item therefrom when the storage unit is in the deployed position.

In the fourth embodiment, the storage unit **401** is in the form of a storage tray **400** that is movably mounted to the ring member **1120**. The storage tray **400** is selectively slidingly movable with respect to the ring member **1120** between a stowed position and a deployed position. The tray **400** is configured for enabling items **490** (Fig. **24**(c)) to be accommodated therein when the tray **400** is in the stowed position, and for enabling such items **490** to be retrieved from the tray **400** when said tray **400** is in the deployed position.

The storage tray **400** comprises an elongate trough member **420,** a distal tray end wall **410** and an annular proximal tray end wall **430** at opposite longitudinal ends of the trough member **420.** The trough member **420** is in the form of a half cylinder having a diameter smaller than the inner diameter of the primary cavity **905.** Thus, the trough member **420** has a generally semi-circular transverse cross-section along a longitudinal length of the trough member **420.**

The distal tray end wall **410** is in the form of a disc having a diameter smaller than the inner diameter of the primary cavity **905,** though larger than that of the trough member **420.** The proximal tray end wall **430** is in the form of a ring defining a central opening **435**, and having an outer diameter smaller than the inner diameter of the projecting structure **1150** and larger than that of the trough member **420**.

Thus, the trough member is configured for being slidingly displaced with respect to passageway **1136** between the stowed position and the deployed position. Referring in particular to **Figs. 18**(c), **24**(a) and **24**(d), the outer cylindrical surface **42**5 of the trough member **420** rests on and is in sliding contact with the inward facing curved contact surface **426** of stop **1137,** which effectively acts as a sliding support. Thus, in this embodiment, the trough member **420** has an external diameter generally complementary to the internal diameter of said cylindrical passageway defined at the contact surface **426** of stop **1137**.

In the stowed position, the proximal end wall **430** is in abutment with shoulder **1122** and a proximal face of stop **1137**. In the deployed position, the distal end wall **410** is in abutment with a distal face of stop **1137**, and the tray is thus prevented from disengaging from the ring member **1120** and thus from exiting the handlebar **900,** when the apparatus is fixedly attached thereto.

The tray **400** may be assembled with the ring member **1120** by first opening the ring member **1120** and separating the longitudinal casing edges **1126, 1127** sufficiently so that the effective internal diameter of the passageway **1136** exceeds the diameter of the distal wall **410,** enabling the tray **400** to be inserted into the passageway **1136.** Thereafter, the ring member **1120** may be closed. Alternatively, the tray **400** may be constructed such that one or another or both end walls **410, 430** are connectable to the trough member **420,** and the tray is assembled by connecting the respective end wall **410** and/or **430** after the trough member **420** has been inserted through passageway **1136.**

In this embodiment the trough member **420** is configured for being reversibly curved with respect to an elongate direction thereof, thus enabling the tray **400** to bend to conform to the curvature of the handlebar **900.** In alternative variations of this embodiment, wherein the apparatus including the tray is to be used with straight handlebars, the tray is not required to bend.

In this embodiment, the trough member is made from a resilient material and is at least sufficiently resilient to enable the trough member **420** to be correspondingly curved when inserted into a part of the internal cavity **901** that is curved, for example the part of the primary cavity **905** corresponding to curved portion **960,** and to enable the trough member **420** to be extracted from this part of the internal cavity to the deployed position. The trough member **420** is also formed with a plurality of longitudinally spaced corrugations **428** on the external surface **425,** which are configured for further enabling said tray to reversibly bend within the primary cavity **905.**

The tray **400** is configured for being deployed to the deployed position using one hand of the cyclist, and for this purpose comprises a handle member **460** that is pullable by the at least one finger of the cyclist. The handle member **460** is in the form of a ring member **464,** proximally displaced away from a proximal face of the proximal end wall **430** by spacing member **462**. Ring member **464** circumscribes a finger opening **465** that is sufficiently large to enable a finger of the cyclist of to be at least partially inserted therein to grasp the handle member sufficiently to enable pulling thereof. To further facilitate pulling of the tray, the proximal end of the tray **400** comprises a proximal recess **470** configured for enabling at least the tip of the finger of the cyclist to be introduced therein. Recess **470** includes central opening 435, a proximal portion **422** of the trough member **420** and partition **426**. Thus, in operation the tip of one finger of the cyclist may be inserted into the recess **470** to thereby facilitate pulling the tray **400** to the deployed position.

The trough member **420** comprises a storage section **429** defined between the partition **426** and distal end wall **410**. In this embodiment, the storage section **429** is particularly suited for accommodating therein a plurality of cylindrical items **490,** each cylindrical item **490** having an external diameter generally complementary to the internal diameter of the trough member **420.** For example, such items **490** may be monetary coins, sweets, gum, or other edible materials. Alternatively, the items are not required to be cylindrical, but can be accommodated in the storage section **429** if they occupy a volume and shape that may be accommodated in the storage section **429** when in the stowed position. For example, rolled up bank notes, papers or other small items may be stored in the tray **400.**

Thus, in order to store items in the storage unit **401,** apparatus **1000** including the storage unit **401** having been fixedly secured to the handlebar **900,** the end cap **1160** is opened and the tray **400** is pulled proximally by a finger of the cyclist, for example. The items **490** are placed in the storage section **429** of the tray, and the tray **400** inserted into the primary cavity **905.** Thereafter, the end cap **1160** may be closed.

While such stowage of the storage unit **401** may be accomplished with one hand and while on the go, it is envisaged that the cyclist will stow items in the storage unit **401** in the handlebar **900** prior to commencing cycling.

Retrieval and use of the storage unit **401** may be accomplished by the cyclist using one hand, and also while cycling, for example as follows. First, the end cap **1160** is opened with one hand, as already disclosed for the second embodiment of the apparatus, *mutatis mutandis.* Then, the cyclist inserts the tip of a finger into recess **470** and grasps the tray **400** with this finger tip and pulls the tray **400** proximally, either partially, for example as illustrated in Figs. **24**(a) to **24**(d), or fully, sufficiently to expose an item **490** to an outside of the bicycle. The cyclist can remove the finger tip from recess **470** and using the same hand may now retrieve and take this item. Thereafter the cyclist may close the storage unit **401** by pushing the tray distally back to the stowed position, for example using one or more fingers or thumb of one hand. The end cap **1160** may then be closed as already disclosed for other embodiments, *mutatis mutandis.*

(It is to be noted, though, that in some alternative variations of the fourth embodiment the apparatus **100**0 may omit the end cap **1160,** and thus cap opening/closing step are not required.)

Referring to Fig. **24(a)** and Fig. **24(b)**, for example, partition **426** comprises a diametric slot **427** having an open end **423** at the periphery of the partition **426** facing in a direction generally away from the trough member **420**. This slot **423** may be used, for example, for inserting and anchoring one end of string to the partition, the other end of the string being outside of the end wall **430** and being configured for being grasped by the hand of the cyclist. For example, the graspable string end may comprise a loop or tab and may facilitate opening of the tray **400** by a cyclist, for example where the cyclist has large fingers and may have difficulty in otherwise grasping the handle **460** and/or in otherwise inserting the fingertip into recess **470.**

In at least some alternative variations of the fourth embodiment, the storage unit **401** may be configured for covering the tray, in particular part or all of the storage section **429** of the tray **400,** when in the stowed position and during movement of the tray **400** from the stowed position to the deployed position.

Tray **400** thus comprises a cover member (not shown) that is hingedly mounted to the trough member **420**. For example, the cover member may be the form of a half cylinder having a diameter smaller than the inner diameter of the primary cavity **905.** Thus, the cover member can have a generally semi-circular transverse cross-section along a longitudinal length of the cover member, generally corresponding to the semi-circular transverse cross-section of the trough member **420**, so that when the cover member is in the closed position with respect to the trough member **420** the two together enclose a generally cylindrical storage volume. A longitudinal hinge arrangement (not shown) may be provided for enabling the cover member to reversibly pivot from a closed position, to an open position.

The cover member may be made from a resilient material and is at least sufficiently resilient to enable the cover member (together with the trough member **420)** to be correspondingly curved when inserted into a part of the internal cavity **901** that is curved, for example the part of the primary cavity **905** corresponding to curved portion **960,** and to enable the trough member **420** with the cover member to be extracted from this part of the internal cavity to the deployed position. The cover member may also be formed, optionally, with a plurality of longitudinally spaced corrugations on the external surface thereof, which are configured for further enabling the covered tray to reversibly bend within the primary cavity **905.**

The cover member may extend distally from the partition **426** to a position **PS.** In this embodiment position **PS** is just proximal to the structure **1150** of the apparatus **1000** when the tray **400** is at the fully deployed position, so that the cover does not collide with the ring member **1120** when being opened at the fully deployed position. However, in other alternative variations of this embodiment the position **PS** may be much closer, proximally, to the partition **426,** and thus the cover member may be opened as soon as this position is proximal to the structure **1150,** when the tray is only partially deployed.

In order to store items in the covered storage unit **401,** apparatus **1000** including the covered storage unit **401** having been fixedly secured to the handlebar **900,** the end cap **1160** is opened and the tray **400** is pulled proximally by a finger of the cyclist, for example. The cover member may be opened by pivoting the same about the longitudinal hinge, and the items **490** are placed in the storage section **429** of the tray. The cover member is then closed over the trough member **420,** and the tray **400** inserted into the primary cavity **905.** Thereafter, the end cap **1160** may be closed.

Retrieval and use of the covered storage unit **401** may be accomplished by the cyclist using one hand, and also while cycling, for example as follows. First, the end cap **1160** is opened with one hand, and the tray **400** is pulled to the fully deployed position, or to a partially deployed position, as already disclosed for the fourth embodiment *mutatis mutandis,* such that position **PS** is proximal to the structure **1150.** The cover member is then pivotably opened with the same hand that was used for pulling the tray **400** to expose an item **490** to an outside of the bicycle, and the cyclist can then retrieve and take this item with the same hand. Thereafter the cyclist may close the cover member and stow the covered storage unit **401** by pushing the tray distally back to the stowed position, for example using one or more fingers or thumb of one hand. The end cap **1160** may then be closed as already disclosed for other embodiments, *mutatis mutandis.* While the above embodiments have been described in the context of a drop handlebar, in which the open end **970** is generally distal of the transverse portion **910,** they apply, *mutatis mutandis,* to drop handlebars in which the open end of the handlebar is generally proximal of the transverse portion, or indeed to any other type of handlebar, including straight handles bars, *mutatis mutandis.*

While the above embodiments for the apparatus and storage units have been described in the context of a drop handlebar, in which the open end **970** is generally distal of the transverse portion **910,** they apply, *mutatis mutandis,* to drop handlebars in which the open end of the handlebar is generally proximal of the transverse portion, or indeed to any other type of handlebar, including straight handles bars, *mutatis mutandis.*

In the method claims that follow, alphanumeric characters and Roman numerals used to designate claim steps are provided for convenience only and do not imply any particular order of performing the steps.

Finally, it should be noted that the word "comprising" as used throughout the appended claims is to be interpreted to mean "including but not limited to".

While there has been shown and disclosed example embodiments in accordance with the invention, it will be appreciated that many changes may be made therein without departing from the spirit of the invention.

## Claims

1. Apparatus for a bicycle handlebar, the bicycle handlebar having an internal handlebar cavity in open communication with an open end of the handlebar, said open end having an edge and an external surface, the apparatus being configured for being fixedly secured to the handlebar and comprising a ring member configured for being fixedly secured to the external surface of the open end of the handlebar and for selectively enabling access to the handlebar cavity via said ring member, wherein said apparatus is configured in use for at least enabling selective retrieval from the handlebar cavity of one or more items with one hand of a user at least while the bicycle is in motion, the one or more items being in a stowed position accommodated within said handlebar cavity, and wherein said ring member is configured for remaining fixedly secured to the external surface at least during said retrieval.

2. Apparatus according to claim 1, wherein said apparatus is further configured in use for releasably affixing thereto said one or more items with said one hand or with another hand of the user, at least when each said item is in said stowed position, and wherein said ring member is configured for remaining fixedly secured to the external surface at least during said affixing.

3. Apparatus according to claim 1 or claim 2, wherein said apparatus is further configured for selectively and alternately opening and closing the open end of said handlebar, at least when said ring member is fixedly secured to the external surface and wherein optionally said ring member comprises an end cap member configured for being selectively closing and opening said ring member, wherein in use and said end cap member is in a closed position with respect to the ring member the open end of said handlebar is closed and access is denied to the handlebar cavity, and wherein in use and said end cap member is in an open position with respect to the ring member the open end of said handlebar is open and access is permitted to the handlebar cavity.

4. Apparatus according to claim 3, wherein said apparatus is configured for releasably affixing thereto said one or more items by releasably clamping an engagement portion of each respective said one or more items between said end cap member and said ring member when said end cap member is engaged to the ring member and when the respective said one or more items are in said stowed position.

5. Apparatus according to claim 4, wherein each respective said item comprises a finger grip portion, said engagement portion, and a housing defining an internal storage volume, in serial relationship, and wherein optionally said apparatus is configured for releasably clamping said engagement portion of each respective said one or more items between said end cap member and said ring member while concurrently compelling the respective said finger grip portion to be in facing relationship with an external portion of said apparatus.

6. Apparatus according to claim 4 or claim 5, wherein said apparatus comprises a clamping arrangement comprising at least one clamp configured for enabling the respective said engagement portion to be automatically clamped to said apparatus when the end cap member is closed, and said engagement portion to be automatically unclamped from said apparatus when said end cap member is open thereby enabling the respective said item to be retrieved from said handlebar cavity by gripping the respective said gripping portion and pulling the respective item out of said handlebar cavity via the respective said gripping portion.

7. Apparatus according to claim 6, wherein said at least one clamp comprises a respective first clamping member in the form of a clamping tab that projects distally from a respective side of said end cap member, and a respective second clamping member in the form of a clamping pad provided on a respective side of said ring member, and wherein optionally a narrow opening is provided between clamping tab and said clamping pad when said end cap member is in the closed position, and wherein said narrow opening is configured for clamping therein said engagement portion of the respective said item while said engagement portion is folded over said clamping pad when said end cap member is in the closed position.

8. Apparatus according to any one of claims 1 to 7, wherein said ring member comprises a generally tubular casing having a first open casing end and a second open casing end, and a longitudinal passageway extending between said first open casing end and said second open casing end.

9. Apparatus according to any one of claims 1 to 8, wherein said ring member comprises at least one longitudinal stop configured for abutting against the edge of the open end of the handlebar when the apparatus is fixedly secured to the handlebar.

10. Apparatus according to any one of claims 1 to 9, further comprising at least one said item is in said stowed position accommodated within said handlebar cavity, each respective said item being in the form of a storage unit comprising a finger grip portion, an engagement portion, and a housing defining an internal storage volume, in serial relationship, wherein said engagement portion is configured to be releasably engaged to said apparatus while concurrently compelling the respective said finger grip portion to be in overlying relationship with an external portion of said apparatus.

11. Apparatus according to claim 10, wherein said finger grip portion is contiguous with said engagement portion and are in the form of any one of: a strip or material, a chord, a string, a chain, and wherein optionally said storage unit is configured having an absence of engagement arrangement for fixedly engaging the storage unit to the inside surface of the internal cavity.

12. A bicycle handlebar comprising an apparatus as defined in any one of claims 1 to 11.

13. A bicycle comprising a bicycle handlebar as defined claim 12.

14. A storage unit configured for being selectively stowed in and retrieved from an internal cavity of a bicycle handlebar via an apparatus, the bicycle handlebar having an internal handlebar cavity in open communication with an open end of the handlebar, said open end having an edge and an external surface, said apparatus being configured for being fixedly secured to the handlebar and comprising a ring member configured for being fixedly secured to the external surface of the open end of the handlebar and for selectively enabling access to the handlebar cavity via said ring member, wherein said apparatus is configured in use for at least enabling selective retrieval from the handlebar cavity of said storage unit with one hand of a user at least while the bicycle is in motion, said storage unit being in a stowed position accommodated within said handlebar cavity and wherein said ring member is configured for remaining fixedly secured to the external surface at least during said retrieval.

15. The storage unit according to claim 14, comprising a housing having a proximal end and a distal end and further defining an internal storage volume, wherein said distal end comprises a finger grip portion, and wherein said storage unit is configured having an absence of engagement arrangement for fixedly engaging the storage unit to the inside surface of the internal cavity.
